# EUROPEAN PATENT SPECIFICATION

(11) **EP 4 176 997 B1**
(45) Date of publication and mention of the grant of the patent: **18.12.2024**
(21) Application number: 20956757.7
(22) Date of filing: 09.10.2020
(51) Int. Cl.: B23K 9/04, B23K 9/095, B23K 9/10, B23K 37/02, B23K 37/04, B23K 9/32

(54) **MACHINE TOOL, WORKPIECE SUPPORTING TOOL FOR MACHINE TOOL, METHOD FOR OPERATING MACHINE TOOL, AND PROGRAM**
WERKZEUGMASCHINE, WERKSTÜCKSTÜTZWERKZEUG FÜR WERKZEUGMASCHINE, VERFAHREN ZUM BETRIEB EINER WERKZEUGMASCHINE UND PROGRAMM
MACHINE-OUTIL, OUTIL DE SUPPORT D'UNE PIÈCE POUR MACHINE-OUTIL, PROCÉDÉ DE FONCTIONNEMENT D'UNE MACHINE-OUTIL, ET PROGRAMME

(43) Date of publication of application: 10.05.2023
(73) Proprietor: Yamazaki Mazak Corporation, Niwa-gun, Aichi 480-0197 (JP)
(72) Inventor: SUZUKI, Atsushi, Niwa-gun, Aichi 480-0197 (JP); OUCHI, Seigo, Niwa-gun, Aichi 480-0197 (JP); ISHIBASHI, Kazuhiro, Niwa-gun, Aichi 480-0197 (JP)
(74) Representative: TBK
(86) International application number: PCT/JP2020/038244
(87) International publication number: WO 2022/074810

(56) References cited:
- WO-A1-2020/079870
- JP-A- 2018 103 307
- JP-A- 2019 150 857
- JP-A- 2020 069 521
- JP-A- H01 257 593
- JP-A- H06 285 655
- JP-A- H07 284 935
- JP-B1- 6 100 449
- US-A1- 2017 144 242
- US-A1- 2018 029 186

## Description

The present invention relates to a machine tool, a workpiece support device of a machine tool, a method of operating a machine tool, and a program, see claims 1, 9, 11 and 13.

### Background Art

A technique of performing additive machining is known in which a material is added to a workpiece using, for example, arc discharge.

As a related technique, JP 6 100 449 B1 discloses a multi-tasking machine (hybrid machine). The multi-tasking machine recited in JP 6 100 449 B1 includes: an additive machining unit that performs additive machining by irradiating a workpiece with energy in a machining region; a cutting unit that performs cutting on the workpiece in the machining region; a cover unit that covers the machining region; and a light shielding filter that is disposed on at least one surface of the cover unit and changes the degree of light shielding based on light received from the machining region.

US 2017/144242 A1 (describing the preamble of claims 1 and 9) shows a machine tool comprising: a table device configured to support a workpiece; a first machining head configured to support a wire in a state in which a tip end of the wire is exposed, and configured to add a molten material generated from the tip end of the wire to the workpiece supported by the table device; a second machining head configured to support a tool for cutting the workpiece supported by the table device; a power supply device configured to supply a current to the wire; and a drive device configured to relatively move the first machining head with respect to the table device. US 2017/144242 A1 further shows a workpiece support device of a machine tool, the machine tool comprising a first machining head configured to support a wire in a state in which a tip end of the wire is exposed and configured to apply a molten material generated from the tip end of the wire to a workpiece, the workpiece support device comprising: a pallet constituting a part of a table device of the machine tool and configured to support the workpiece. US 2017/144242 A1 also shows a program for causing a machine tool that comprises a first machining head, a second machining head, and a table device to execute the step of cutting the workpiece supported by a table device by driving a tool supported by the second machining head.

Further techniques according to the prior art are shown in JP H01-257593 A, JP 2018-103307 A and US 2018/029186 A1.

### Summary of Invention

It is the object of the present invention to provide an improved technique of, in a machine tool that performs additive machining and cutting, identifying a position of a tip end of a wire supported by a first machining head that performs additive machining. A machine tool, a workpiece support device for a machine tool, a method of operating such machine tool, and a corresponding program according to the present invention are defined in claims 1, 9, 11 and 13 respectively.

Further advantageous developments according to the present invention are defined in the dependent claims.

The present invention provides a technique of, in a machine tool that performs additive machining and cutting, identifying a position of a tip end of a wire supported by a first machining head that performs additive machining.

### Brief Description of Drawings

[FIG. 1] FIG. 1 is a schematic cross-sectional view schematically illustrating how a wire is supported by a first machining head.
[FIG. 2] FIG. 2 is a diagram schematically illustrates a machine tool according to a first embodiment.
[FIG. 3] FIG. 3 is a diagram schematically illustrating the machine tool according to the first embodiment.
[FIG. 4] FIG. 4 is a schematic cross-sectional view schematically illustrating how additive machining is performed using the first machining head.
[FIG. 5] FIG. 5 is a schematic cross-sectional view schematically illustrating an example of how the position of the tip end of the wire is identified using a conduction block.
[FIG. 6] FIG. 6 is a schematic cross-sectional view schematically illustrating another example of how the position of the tip end of the wire is identified using the conduction block.
[FIG. 7] FIG. 7 is a schematic cross-sectional view schematically illustrating still another example of how the position of the tip end of the wire is identified using the conduction block.
[FIG. 8] FIG. 8 is a schematic cross-sectional view schematically illustrating still another example of how the position of the tip end of the wire is identified using the conduction block.
[FIG. 9] FIG. 9 is a schematic cross-sectional view schematically illustrating a modification of the conduction block.
[FIG. 10] FIG. 10 is a schematic perspective view schematically illustrating an example of the shape of the conduction block.
[FIG. 11] FIG. 11 is a schematic perspective view schematically illustrating another example of the shape of the conduction block.
[FIG. 12] FIG. 12 is a diagram schematically illustrating the machine tool according to the first embodiment.
[FIG. 13] FIG. 13 is a diagram schematically illustrating the machine tool according to the first embodiment.
[FIG. 14] FIG. 14 is a diagram schematically illustrating the machine tool according to the first embodiment.
[FIG. 15] FIG. 15 is an enlarged view schematically illustrating a part of the machine tool according to the first embodiment.
[FIG. 16] FIG. 16 is an enlarged view schematically illustrating a part of the machine tool according to the first embodiment.
[FIG. 17] FIG. 17 is an enlarged view schematically illustrating a part of the machine tool according to the first embodiment.
[FIG. 18] FIG. 18 is a schematic cross-sectional view schematically illustrating an example of how the position of the tip end of the wire is identified using the conduction block.
[FIG. 19] FIG. 19 is a schematic cross-sectional view schematically illustrating an example of how the position of the tip end of the wire is identified using the conduction block.
[FIG. 20] FIG. 20 is a schematic perspective view schematically illustrating an example of the structure of the machine tool according to the first embodiment.
[FIG. 21] FIG. 21 is a schematic perspective view schematically illustrating an example of a workpiece support device of a machine tool according to a second embodiment.
[FIG. 22] FIG. 22 is a schematic perspective view schematically illustrating how one step of a method of operating a machine tool according to an embodiment is performed.
[FIG. 23] FIG. 23 is a schematic perspective view schematically illustrating how one step of the method of operating the machine tool according to the embodiment is performed.
[FIG. 24] FIG. 24 is a flowchart illustrating an example of the method of operating the machine tool according to the embodiment.
[FIG. 25] FIG. 25 is a flowchart illustrating an example of the method of operating the machine tool according to the embodiment.
[FIG. 26] FIG. 26 is a flowchart illustrating an example of the method of operating the machine tool according to the embodiment.
[FIG. 27] FIG. 27 is a flowchart illustrating an example of the method of operating the machine tool according to the embodiment.
[FIG. 28] FIG. 28 is a diagram schematically illustrating a machine tool according to another embodiment.

### Description of Embodiments

By referring to the drawings, description will be made with regard to a machine tool 1, a workpiece support device B of the machine tool 1, a method of operating the machine tool 1, and a program according to some embodiments. In the following description of the embodiments, parts, portions, members, and/or elements having the same function will be denoted with the same reference numerals, and description of parts, portions, members, and/or elements denoted with the same reference numerals will not be repeated.

### (Description of Terms)

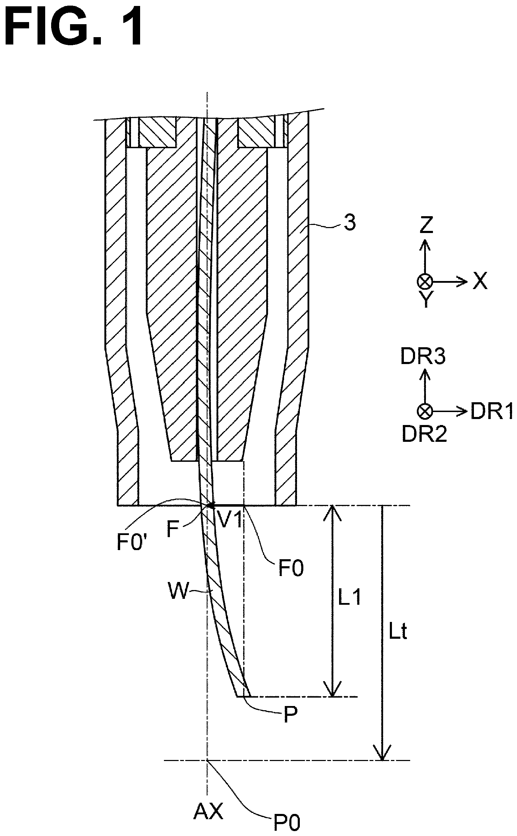

As illustrated in FIG. 1, in the present specification, the term "imaginary center axis AX of the wire W" means an axis that passes through a position where the wire W exits from a first machining head 3 and extends along a direction in which the wire W exits from the first machining head 3. In other words, the imaginary center axis AX of the wire W means an axis along the path through which the wire W in linear shape passes when the linear wire W exits from the first machining head 3. The imaginary center axis AX of the wire W is parallel to, for example, the longitudinal direction of the first machining head 3. The imaginary center axis AX of the wire W may coincide with the longitudinal center axis of the first machining head 3.

As illustrated in FIG. 1, in the present specification, the term "protruding length *L1* of the wire" means a length by which the wire W protrudes from the first machining head 3 along the imaginary center axis AX.

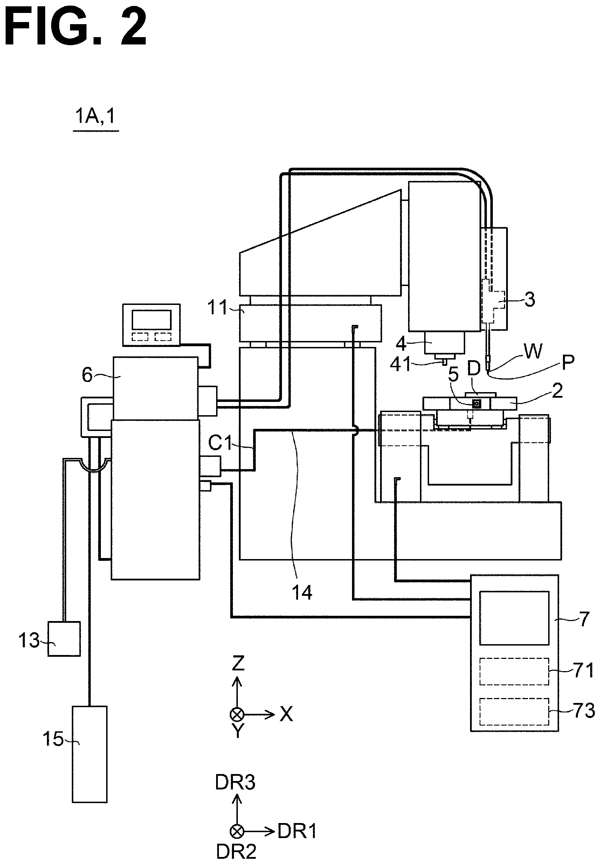

As illustrated in FIG. 1, in the present specification, the term "target value *Lt* of the protruding length of the wire" means a target value of the length of the wire W protruding from the first machining head 3 along the imaginary center axis AX. The target value *Lt* of the protruding length of the wire is set in advance by a user, for example. The target value *Lt* of the protruding length of the wire is stored in, for example, a storage device 73 (see FIG. 2, if necessary).

As illustrated in FIG. 1, in the present specification, the term "imaginary position *P0* of the tip end of the wire W" means the position of the tip end of the wire W having an ideal linear shape when the wire W having the ideal linear shape protrudes from the first machining head 3 by the target value *Lt.* In other words, the "imaginary position *P0* of the tip end of the wire W" means a position away from the position of the first machining head 3 along the imaginary center axis AX by the target value *Lt* of the protruding length of the wire.

As illustrated in FIG. 1, in the present specification, the term "estimated relative position *F0* of the first machining head 3 with respect to tip end *P* of the wire W" means an estimated position of the first machining head 3 with reference to the tip end *P* of the wire W supported by the first machining head 3. In initial state, the "estimated relative position *F0* of the first machining head 3 with respect to the tip end *P* of the wire W" is a position away from the tip end *P* of the wire W along a third direction *DR3* by the protruding length *L1* of the wire (or by the target value *Lt* of the protruding length of the wire if the protruding length *L1* of the wire is unknown). FIG. 1 also illustrates a corrected "estimated relative position *F0*' of the first machining head 3 with respect to the leading end of the wire W".

As exemplified in FIG. 1, in the present specification, a direction perpendicular to the imaginary center axis AX is defined as a "first direction *DR1*", and a direction perpendicular to both the imaginary center axis AX and the first direction *DR1* is defined as a "second direction *DR2*". Also, a direction parallel to the imaginary center axis AX of the wire W and extending from the distal end of the first machining head 3 toward the base end of the first machining head 3 is defined as the "third direction *DR3".* In FIG. 1, the first direction *DR1* coincides with the positive direction of an X axis (+X direction), the second direction *DR2* coincides with the positive direction of a Y axis (+Y direction), and the third direction *DR3* coincides with the positive direction of the Z axis (+Z direction).

### (First Embodiment)

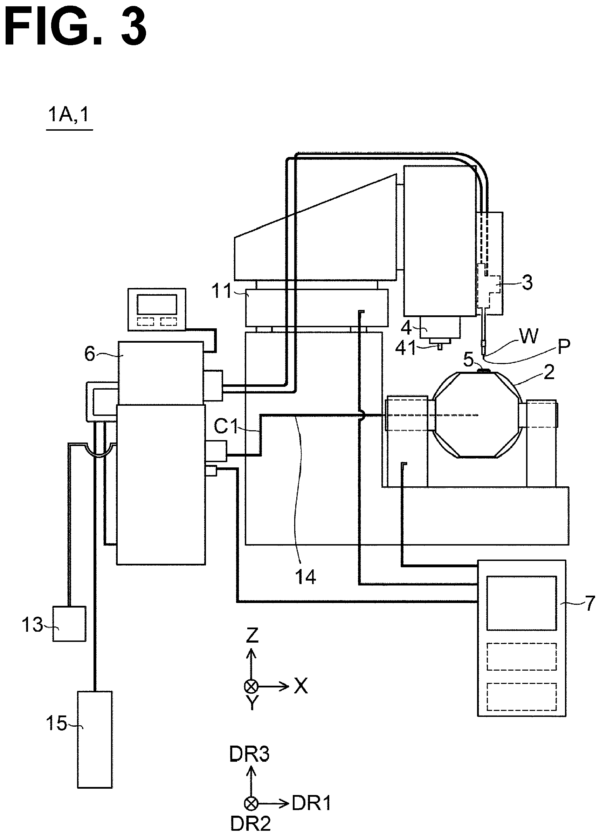

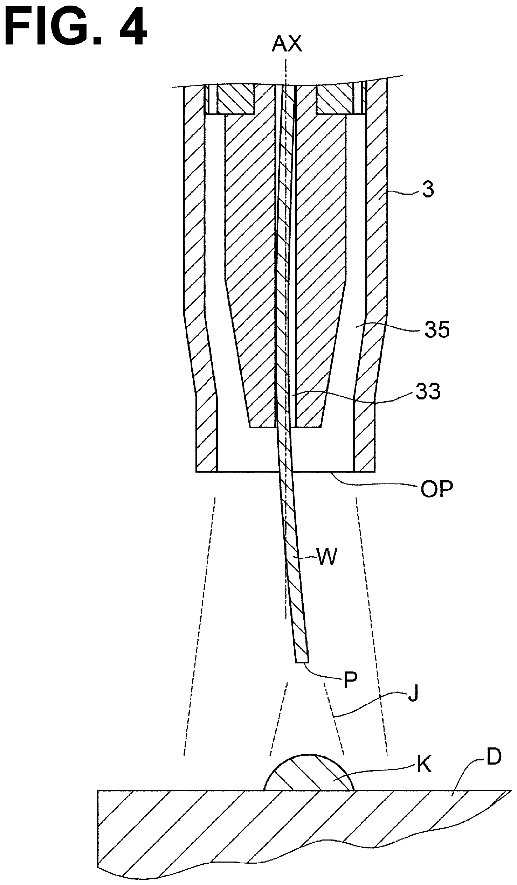

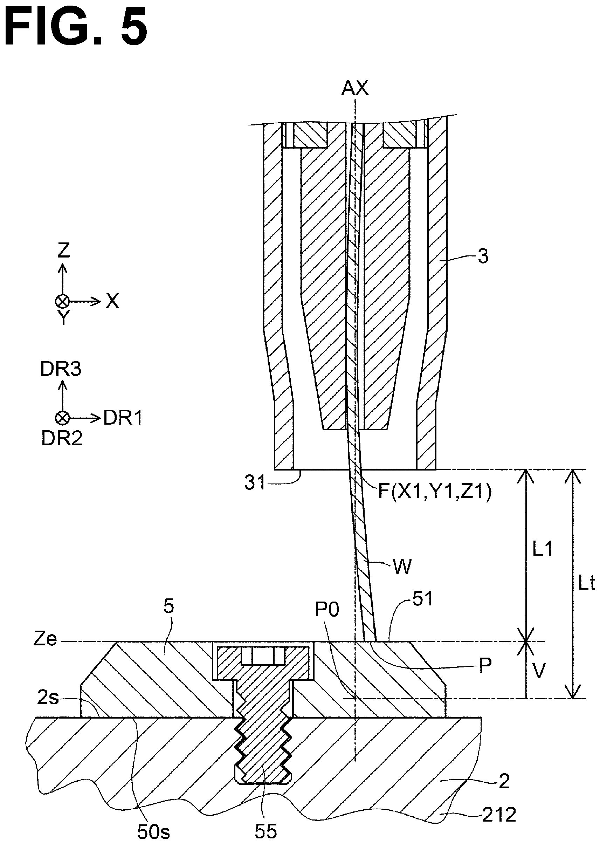

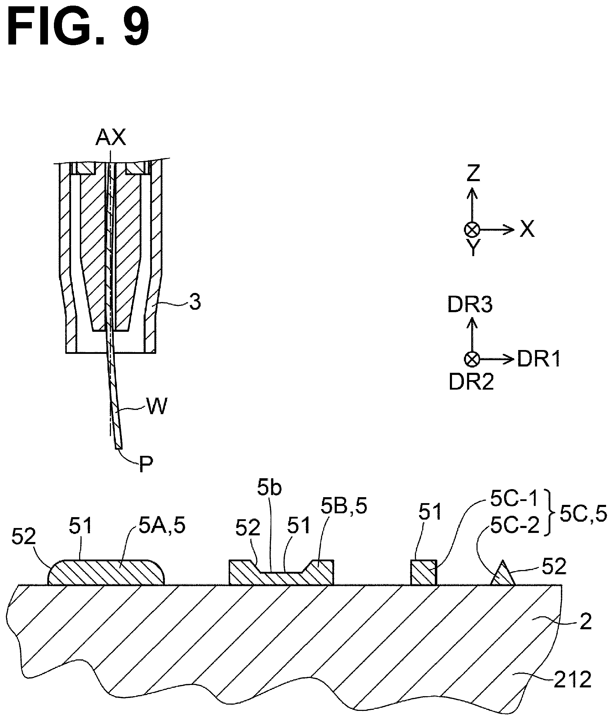

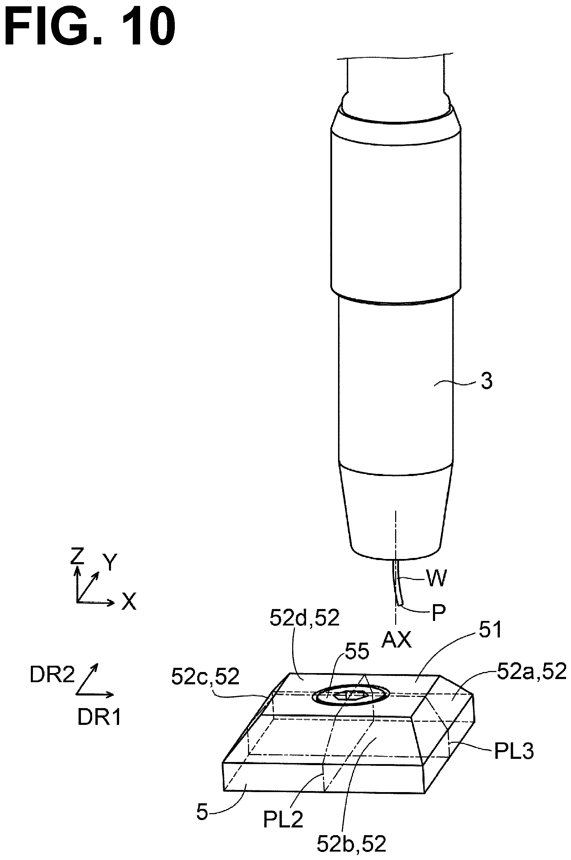

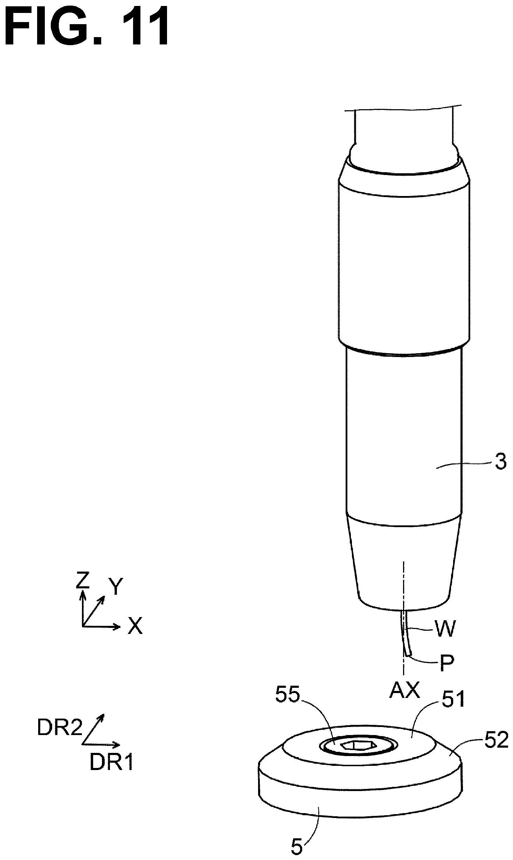

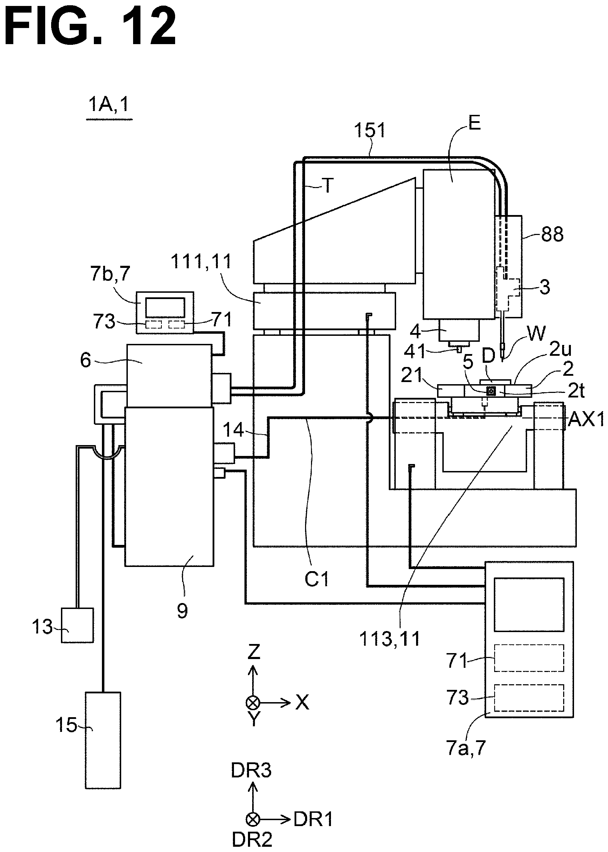

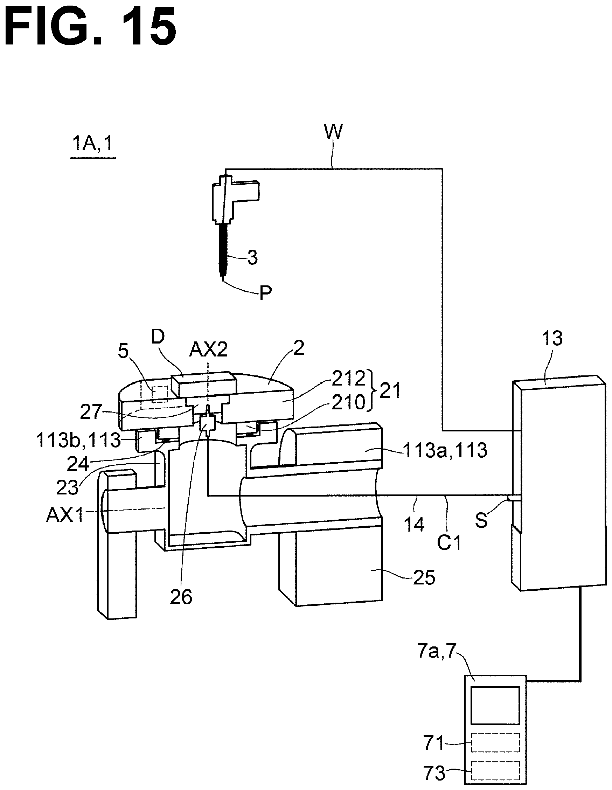

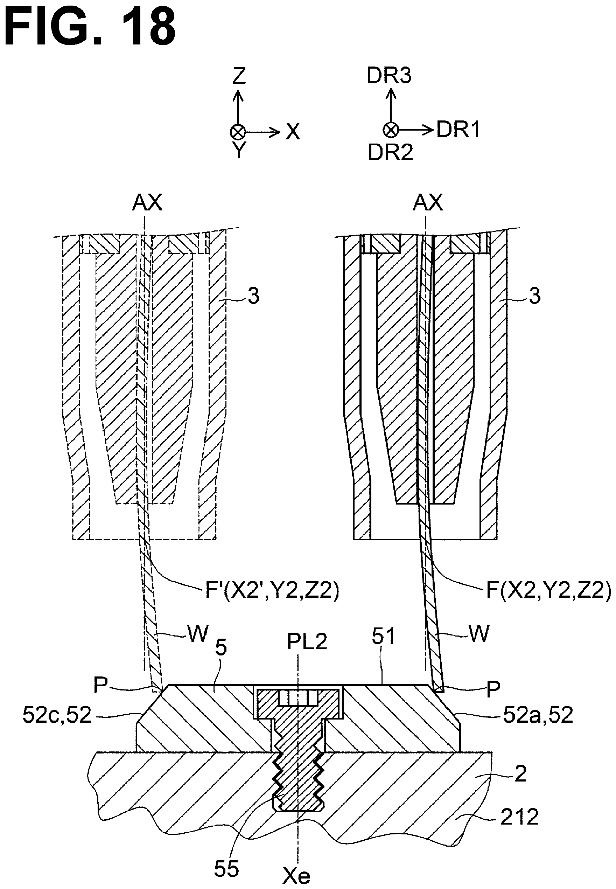

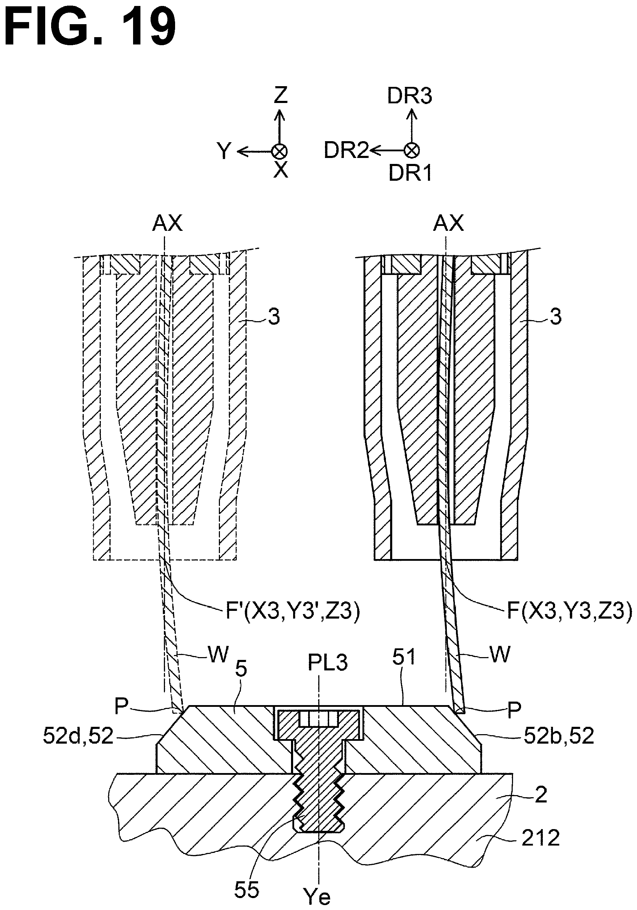

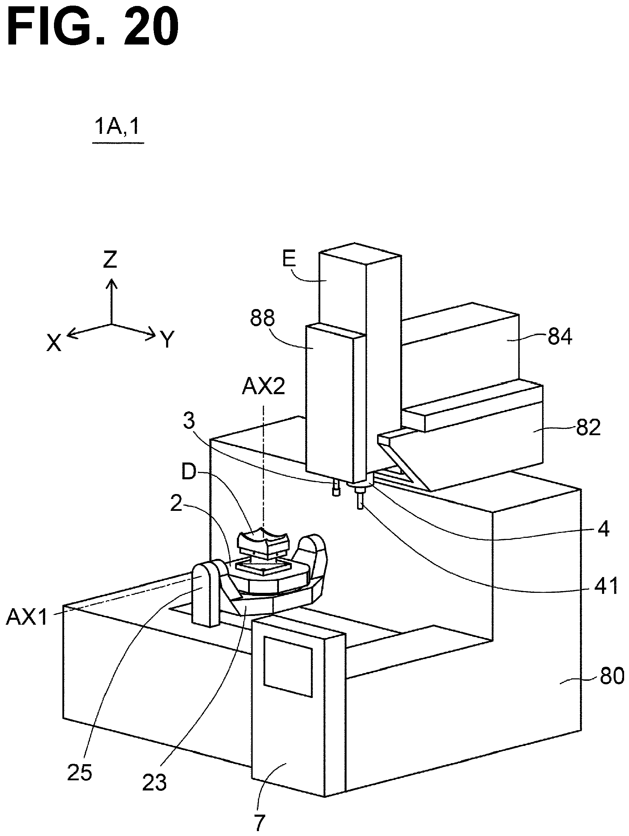

A machine tool 1A according to the first embodiment will be described by referring to FIGs. 1 to 20. FIG. 1 is a schematic cross-sectional view schematically illustrating how the wire W is supported by the first machining head 3. FIGs. 2 and 3 are diagrams schematically illustrating the machine tool 1A according to the first embodiment. FIG. 4 is a schematic cross-sectional view schematically illustrating how additive machining is performed using the first machining head 3. FIGs. 5 to 8 are schematic cross-sectional views schematically illustrating how the position of the tip end *P* of the wire W is identified using a conduction block 5. FIG. 9 is a schematic cross-sectional view schematically illustrating a modification of the conduction block 5. FIG. 10 is a schematic perspective view schematically illustrating an example of the shape of the conduction block 5. FIG. 11 is a schematic perspective view schematically illustrating another example of the shape of the conduction block 5. FIGs. 12 to 14 are diagrams schematically illustrating the machine tool 1A according to the first embodiment. FIGs. 15 to 17 are enlarged views schematically illustrating a part of the machine tool 1A according to the first embodiment. FIGs. 18 and 19 are schematic cross-sectional views schematically illustrating how the position of the tip end *P* of the wire W is identified using the conduction block 5. FIG. 20 is a schematic perspective view schematically illustrating an example of the structure of the machine tool 1A according to the first embodiment.

As illustrated in FIG. 2, the machine tool 1A according to the first embodiment includes a table device 2, the first machining head 3, a second machining head 4, a drive device 11, a power supply device 13, the conduction block 5, and a first electric circuit C1. The machine tool 1A may include: a wire supply device 6, which supplies the wire W to the first machining head 3; and/or a shield gas supply device 15, which supplies shield gas to the first machining head 3.

The table device 2 supports a workpiece D, which is an object to be machined. The table device 2 may be a device capable of moving the workpiece D when the workpiece D is machined by the machine tool 1A. Alternatively, the table device 2 may be a device incapable of moving the workpiece D when the workpiece D is machined by the machine tool 1A.

The first machining head 3 is a machining head that performs additive machining. The first machining head 3 supports the wire W in a state in which the tip end *P* of the wire W is exposed from the first machining head 3. In the example illustrated in FIG. 4, the first machining head 3 supports the wire W such that the wire W traverses a tip opening OP of the first machining head 3, and a part of the wire W protrudes from a tip portion of the first machining head 3. The tip end *P* of the wire W is exposed to the outside of the first machining head 3.

The first machining head 3 adds a molten material generated from the tip end *P* of the wire W to the workpiece D, which is supported by the table device 2. For example, as illustrated in FIG. 4, the wire W is melted by arc discharge J generated between the tip end *P* of the wire W and the workpiece D, and a molten material K generated from the tip end *P* of the wire W is added to the workpiece D. In the first embodiment, any conductive wire can be used as the wire W supported by the first machining head 3. The wire W is made of, for example, metal. There is no limitation to the diameter of the wire W supported by the first machining head 3. In other words, a wire W having any diameter may be used in the first embodiment.

In the example illustrated in FIG. 2, the second machining head 4 is a machining head that supports a tool 41, which is for performing cutting. The second machining head 4 supports the tool 41, which cuts the workpiece D (more specifically, the workpiece D, which is supported by the table device 2). In a case where the machine tool 1A includes the first machining head 3 and the second machining head 4, a material can be added to the workpiece D using the first machining head 3, and the material added to the workpiece D can be cut using the tool 41, which is supported by the second machining head 4. It is to be noted that in the present specification, an added object added to and integrated with the workpiece D is regarded as a part of the workpiece D. Therefore, cutting the added object added to the workpiece D is regarded as one aspect of cutting the workpiece D.

The power supply device 13 supplies current to the wire W. At the time of additive machining, the wire W is melted by the current supplied to the wire W. More specifically, the tip end *P* of the wire W is melted by arc discharge generated between the tip end *P* of the wire W and the workpiece D. At the position identifying time, at which the position of the tip end *P* of the wire W is identified, the current supplied to the wire W is used to detect whether the tip end *P* of the wire W and the conduction block 5 are in contact with each other.

The conduction block 5 is disposed on the table device 2. The conduction block 5 identifies the position of the tip end *P* of the wire W. More specifically, as illustrated in FIG. 5, when the tip end *P* of the wire W contacts the conduction block 5, the position of the tip end *P* of the wire W is identified to be on a surface of the conduction block 5.

In the example illustrated in FIG. 3, the drive device 11 moves the first machining head 3 with respect to the table device 2. The drive device 11 is capable of moving the first machining head 3 with respect to the table device 2 so that the tip end *P* of the wire W exposed from the first machining head 3 and the conduction block 5 disposed on the table device 2 are brought into contact with each other. The drive device 11 may be a device that moves one of the first machining head 3 and the table device 2 with respect to the other of the first machining head 3 and the table device 2. Alternatively, the drive device 11 may be a device capable of moving both the first machining head 3 and the table device 2.

In the example illustrated in FIG. 3, the first electric circuit C1 is switched from an open state to a closed state by contact between the tip end *P* of the wire W exposed from the first machining head 3 and the conduction block 5 disposed on the table device 2. When the first electric circuit C1 is in the closed state, the current supplied to the wire W flows through the first electric circuit C1 including the wire W and the conduction block 5. In contrast, when the first electric circuit C1 is in the open state, no current flows through the first electric circuit C1 including the wire W and the conduction block 5. Therefore, whether the tip end *P* of the wire W and the conduction block 5 are in contact with each other can be detected based on whether the first electric circuit C1 is in the open state or the closed state, in other words, based on whether current is flowing through the first electric circuit C1.

The first electric circuit C1 described above may include the power supply device 13, in addition to the wire W and the conduction block 5. In other words, current may be supplied from the power supply device 13 to the first electric circuit C1. The first electric circuit C1 may also include, in addition to the wire W and the conduction block 5, a cable 14, which electrically connects the table device 2 and the power supply device 13 to each other. In this case, the current supplied from the power supply device 13 flows through the first electric circuit C1 including the wire W, the conduction block 5, and the cable 14.

In the examples illustrated in FIGs. 2 to 5, whether the tip end *P* of the wire W and the conduction block 5 are in contact with each other can be detected based on whether the first electric circuit C1 is in the open state or the closed state (such a closed state that current is flowing through the first electric circuit C1). With this configuration, by detecting that the first electric circuit C1 is in the closed state (such a closed state that current is flowing through the first electric circuit C1), the position of the tip end *P* of the wire W is identified to be on the surface of the conduction block 5.

Thus, the first embodiment provides, in the machine tool 1A, which performs additive machining and cutting, a technique of identifying the position of the tip end *P* of the wire W supported by the first machining head 3, which performs additive machining.

In the machine tool 1A according to the first embodiment, the conduction block 5, which identifies the position of the tip end *P* of the wire W, is disposed on the table device 2, which supports the workpiece D. In this case, when the tip end *P* of the wire W is brought into contact with the conduction block 5, it is not necessary to move the first machining head 3 to a position far away from the normal machining region. This ensures that the step of identifying the position of the tip end *P* of the wire W is executed quickly. Also, it is not necessary to increase the movable range of the first machining head 3 in order to execute the step of identifying the position of the tip end *P* of the wire W.

Also, in a case where the conduction block 5 is disposed on the table device 2, which supports the workpiece D, it is not necessary to provide a dedicated table for supporting the conduction block 5, separately from the table device 2. Also, in a case where it is not necessary to provide a dedicated table for supporting the conduction block 5, the entire size of the machine tool 1A is made compact.

In the first embodiment, after the position of the tip end *P* of the wire W has been identified, the position of the tip end *P* of the wire W may be corrected. A method of correcting the position of the tip end *P* of the wire W will be described later. By correcting the position of the tip end *P* of the wire W, the accuracy of the position or shape of the added object added to the workpiece D (in other words, a molten material generated from the tip end *P* of the wire W) is improved. In the first embodiment, the table device 2 that supports the workpiece D when additive machining is performed on the workpiece D is the same as the table device 2 that supports the workpiece D when cutting is performed on the workpiece D. In this case, in addition to improving the accuracy of the position or shape of the added object added to the workpiece D, the surface of the added object added to the workpiece D can be cut into a desired shape with high accuracy in the cutting performed after the additive machining. In other words, excessive cutting or insufficient cutting is prevented from occurring in the cutting step performed after the additive machining step.

### (Optional Additional Configurations)

Next, by referring to FIGs. 1 to 20, description will be made with regard to optional additional configurations that can be adopted in the machine tool 1A according to the first embodiment.

### (First Surface 51 of Conduction Block 5)

In the example illustrated in FIG. 5, the conduction block 5 has a first surface 51 (more specifically, a flat first surface 51), which is for identifying the protruding length *L1* of the wire W protruding from the first machining head 3. In the example illustrated in FIG. 5, the first surface 51 is a surface perpendicular to the imaginary center axis AX of the wire W supported by the first machining head 3.

As illustrated in FIG. 5, a case where the tip end *P* of the wire W is in contact with the first surface 51 of the conduction block 5 is assumed. In this case, the protruding length *L1* of the wire W corresponds to the difference between an actual position *F* of the first machining head 3 (more specifically, the actual position of a distal end 31 of the first machining head 3) in the direction along the imaginary center axis AX of the wire W and the position of the first surface 51 in the direction along the imaginary center axis AX of the wire W.

Whether the tip end *P* of the wire W is in contact with the first surface 51 of the conduction block 5 can be determined by the control device 7 (see FIG. 2) based on the state of the first electric circuit C1 (more specifically, based on whether current is flowing through the first electric circuit C1). Also, the actual position *F* (Z coordinate: *Z1*) and the position of the first surface 51 in the direction along the imaginary center axis AX of the wire W (Z coordinate: *Ze*) can be calculated by the control device 7.

### (Inclined Surface 52 of Conduction Block 5)

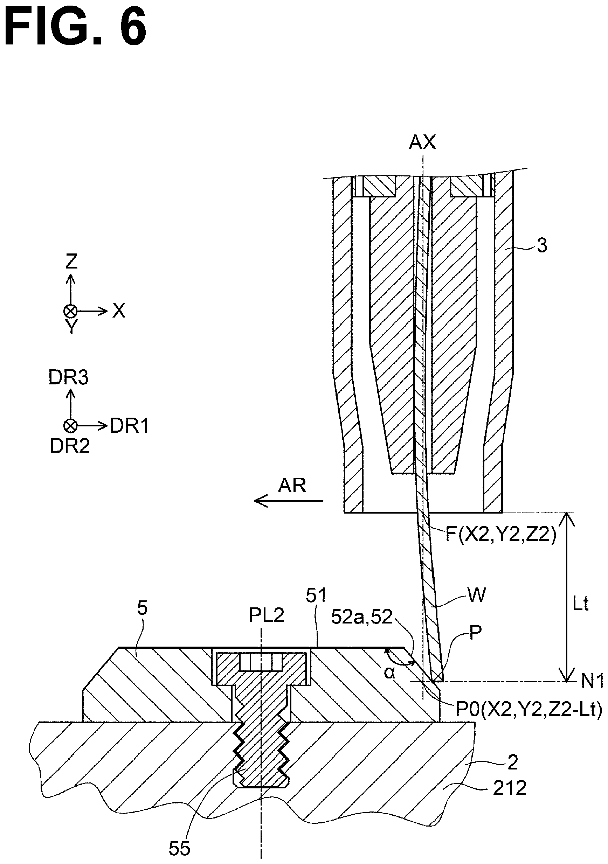

In the example illustrated in FIG. 6, the conduction block 5 has an inclined surface 52, which is disposed so as to be inclined with respect to the first surface 51. As illustrated in FIG. 6, when the wire W is disposed such that the imaginary center axis AX of the wire W is perpendicular to the first surface 51, the inclined surface 52 is inclined with respect to the imaginary center axis AX. In the example illustrated in FIG. 6, the first surface 51 of the conduction block 5 is disposed at a top portion of the conduction block 5, and the inclined surface 52 of the conduction block 5 is disposed at a side portion of the conduction block 5. In the example illustrated in FIG. 6, the inclined surface 52 is a flat inclined surface.

The inclined surface 52 is a surface for identifying the displacement amount of the tip end *P* of the wire W from the imaginary center axis AX of the wire W. For example, the first inclined surface 52a is a surface for identifying a first displacement amount indicating the degree to which the tip end *P* of the wire W is displaced from the imaginary center axis AX in the first direction *DR1.*

The control device 7 is capable of calculating the above-described first displacement amount based on: the actual position *F* of the first machining head 3 in a state in which the tip end *P* of the wire W is in contact with the first inclined surface 52a; and the position of the conduction block 5 (for example, the position of the first inclined surface 52a or the position of a second surface PL2). Details will be described later. It is to be noted that whether the tip end *P* of the wire W is in contact with the first inclined surface 52a of the conduction block 5 can be determined by the control device 7 based on the state of the first electric circuit C1 (more specifically, based on whether current is flowing through the first electric circuit C1).

### (Second Inclined Surface 52b of Conduction Block 5)

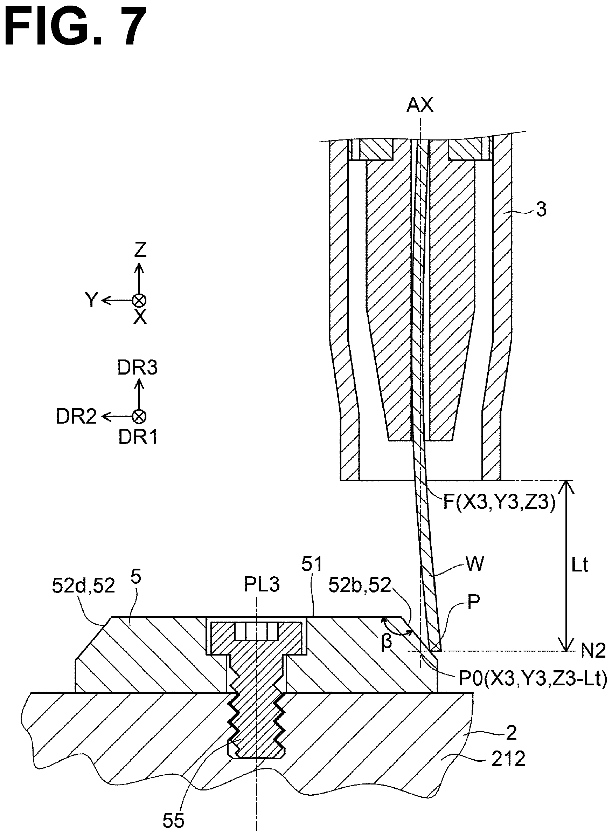

In the example illustrated in FIG. 7, the inclined surface 52 of the conduction block 5 has a second inclined surface 52a, in addition to the first inclined surface 52b (see FIG. 6). In the example illustrated in FIG. 6, the first inclined surface 52a is a surface for identifying a first displacement amount indicating the degree to which the tip end *P* of the wire W is displaced from the imaginary center axis AX in the first direction *DR1.* In contrast, in the example illustrated in FIG. 7, the second inclined surface 52b is a surface for identifying a second displacement amount indicating the degree to which the tip end *P* of the wire W is displaced from the imaginary center axis AX in the second direction *DR2*. It is to be noted that the second direction *DR2* is perpendicular to the first direction *DR1.*

In a case where the inclined surface 52 of the conduction block 5 has the first inclined surface 52a and the second inclined surface 52b, it is possible to identify both the degree to which the tip end *P* of the wire W is displaced from the imaginary center axis AX in the first direction *DR1* and the degree to which the tip end *P* of the wire W is displaced from the imaginary center axis AX in the second direction *DR2*.

The control device 7 is capable of calculating the above-described second displacement amount based on: the actual position *F* of the first machining head 3 in a state in which the tip end *P* of the wire W is in contact with the second inclined surface 52b; and the position of the conduction block 5 (for example, the position of the second inclined surface 52b or the position of a third surface PL3). Details will be described later. It is to be noted that whether the tip end *P* of the wire W is in contact with the second inclined surface 52b of the conduction block 5 can be determined by the control device 7 based on the state of the first electric circuit C1 (more specifically, based on whether current is flowing through the first electric circuit C1).

### (Conduction Block 5)

As exemplified in FIG. 6, in a case where the surface for identifying the displacement amount of the tip end *P* of the wire W from the imaginary center axis AX is the inclined surface 52, the tip end *P* of the wire W can be more reliably brought into contact with the conduction block 5 by moving the first machining head 3 supporting the wire W in a direction perpendicular to the imaginary center axis AX (the direction indicated by an arrow AR in FIG. 6). In this case, the position of the tip end *P* of the wire W is accurately identified.

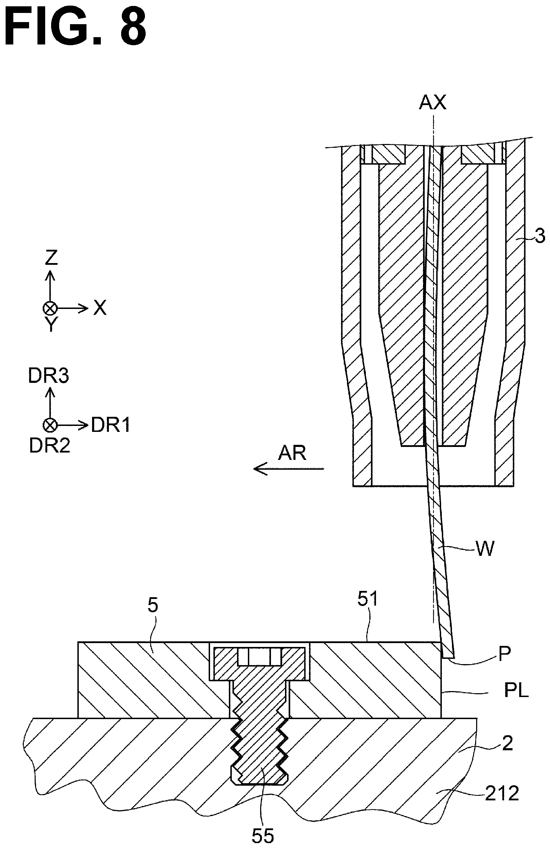

In contrast, as illustrated in FIG. 8 not covered by the present invention, it is assumed that a plane for identifying the displacement amount of the tip end *P* of the wire W from the imaginary center axis AX is a surface PL, which is parallel to the imaginary center axis AX of the wire W. In this case, when the first machining head 3 supporting the wire W is moved in the direction perpendicular to the imaginary center axis AX (the direction indicated by the arrow AR in FIG. 8), a portion other than the tip end *P* of the wire W may come into contact with the surface PL of the conduction block 5. In this case, the position of the tip end *P* of the wire W cannot be accurately identified.

Under the circumstances, the surface for identifying the displacement amount of the tip end *P* of the wire W from the imaginary center axis AX is, according to the present invention, the inclined surface 52.

As exemplified in FIG. 6, an inclination angle *α* of the inclined surface 52 (for example, the first inclined surface 52a) with respect to the first surface 51 is preferably greater than 90 degrees. Also, from the viewpoint of reducing the possibility that a portion other than the tip end *P* of the wire W contacts the conduction block 5, the inclination angle *α* of the inclined surface 52 (for example, the first inclined surface 52a) with respect to the first surface 51 is preferably greater than 100 degrees. In the example illustrated in FIG. 6, the inclination angle *α* of the inclined surface 52 (for example, the first inclined surface 52a) with respect to the first surface 51 is greater than 100 degrees and smaller than 180 degrees. In the example illustrated in FIG. 6, the first surface 51 and the inclined surface 52 are directly connected to each other. However, the first surface 51 and the inclined surface 52 may be separated from each other. In the example illustrated in FIG. 6, the inclination angle *α* of the first inclined surface 52a with respect to the first surface 51 is constant, without changing in the direction along the imaginary center axis AX.

As exemplified in FIG. 7, the inclination angle *β* of the second inclined surface 52b with respect to the first surface 51 is preferably greater than 90 degrees. Also, from the viewpoint of reducing the possibility that a portion other than the tip end *P* of the wire W contacts the conduction block 5, the inclination angle *β* of the second inclined surface 52b with respect to the first surface 51 is preferably greater than 100 degrees. In the example illustrated in FIG. 7, the inclination angle *β* of the second inclined surface 52b with respect to the first surface 51 is greater than 100 degrees and smaller than 180 degrees. The inclination angle *β* of the second inclined surface 52b with respect to the first surface 51 may be the same as or different from the inclination angle *α* (see FIG. 6) of the first inclined surface 52a with respect to the first surface 51.

Next, another modification of the shape of the conduction block 5 will be described by referring to FIG. 9.

As illustrated in FIG. 9, the inclined surface 52 of the conduction block 5A may be a curved inclined surface (for example, a protrusion inclined surface or a depression inclined surface). In other words, the inclination angle of the inclined surface 52 with respect to the first surface 51 may change in the direction along the imaginary center axis AX.

As exemplified in FIG. 9, in a case where the conduction block 5b has a depression 5b, the first surface 51 of the conduction block 5b may be the bottom surface of the depression 5b. Also, the inclined surface 52 of the conduction block 5 may be a side surface of the depression 5b. In the example illustrated in FIG. 9, the inclination angle of the inclined surface 52 with respect to the first surface 51 is greater than 100 degrees and smaller than 180 degrees.

As exemplified in FIG. 9, a conduction block 5C may include: a first block 5C-1, which has a first surface 51; and a second block 5C-2, which has an inclined surface 52.

In the example illustrated in FIG. 9, a plurality of conduction blocks (5A, 5B, 5C-1, 5C-2) are disposed on the table device 2. However, it is needless to say that the number of conduction blocks disposed on the table device 2 may be one.

In the examples illustrated in FIGs. 5 to 9, the conduction block 5 is fixed to the table device 2 (for example, a pallet 212 of the table device 2). From the viewpoint of making the conduction block 5 replaceable, the conduction block 5 may be detachably fixed to the table device 2. For example, as exemplified in FIG. 5, the conduction block 5 may be fixed to the table device 2 via a fixing member 55, such as a fastener. In the example illustrated in FIG. 5, the fixing member 55 is inserted into a through-hole of the conduction block 5 and a screw hole of the table device 2, and a male screw portion of the fixing member 55 is screwed with a female screw portion of the table device 2. It is to be noted that when it is not necessary to replace the conduction block 5, the conduction block 5 may be integrally formed with the table device 2 (for example, the pallet 212 of the table device 2). In the example illustrated in FIG. 5, a first contact surface 50s of the conduction block 5 is in contact with a second contact surface 2s of the table device 2. Also, the first contact surface 50s is a flat surface, and the second contact surface 2s is a flat surface. In a case where the first contact surface 50s and the second contact surface 2s are flat surfaces, the conduction block 5 is stably supported by the table device 2.

The material of the conduction block 5 may be the same as the material of the member of the table device 2 that contacts the workpiece D (for example, the pallet 212, to which the workpiece D is attached), or may be different from the material of the member of the table device 2 that contacts the workpiece D. The material of the conduction block 5 is preferably a material that is higher in wear resistance to arc discharge than the material of the member of the table device 2 that contacts the workpiece D (for example, the pallet 212, to which the workpiece D is attached). In this case, wear of the conduction block 5 is eliminated or minimized when the position of the tip end *P* of the wire W is identified using the conduction block 5. This ensures that even if the conduction block 5 is repeatedly used, the accuracy of identifying the position of the tip end *P* of the wire W is less likely to decrease. A tungsten-containing alloy (for example, an alloy containing copper and tungsten) is exemplified as a material that is high in wear resistance to arc discharge. Therefore, the conduction block 5 may be formed of a tungsten-containing alloy (for example, an alloy containing copper and tungsten).

From the viewpoint of identifying the position of the tip end *P* of the wire W with high accuracy (or from the viewpoint of eliminating or minimizing wear of the conduction block 5 due to contact of the tip end *P* of the wire W with the conduction block 5), the conduction block 5 may be made of a material that is higher in hardness (for example, Shore hardness) than the material of the member of the table device 2 that contacts the workpiece D (for example, the pallet 212, to which the workpiece D is attached).

In the example illustrated in FIG. 10, the conduction block 5 has a third inclined surface 52c, which is symmetrical to the first inclined surface 52a with respect to the second surface PL2 (more specifically, the center surface of the conduction block 5 perpendicular to the first direction *DR1*). More specifically, the conduction block 5 has the third inclined surface 52c, which is disposed symmetrically to the first inclined surface 52a with respect to a second surface PL2, which is perpendicular to the first surface 51. In a case where the conduction block 5 has the first inclined surface 52a and the third inclined surface 52c, the first displacement amount indicating the degree to which the tip end *P* of the wire W is displaced from the imaginary center axis AX in the first direction *DR1* can be identified using both the first inclined surface 52a and the third inclined surface 52c. In this case, the accuracy of the first displacement amount calculated by the control device 7 is improved.

In the example illustrated in FIG. 10, the conduction block 5 has a fourth inclined surface 52d, which is symmetrical to the second inclined surface 52b with respect to the third surface PL3 (more specifically, the center surface of the conduction block 5 perpendicular to the second direction *DR2*). More specifically, the conduction block 5 has the fourth inclined surface 52d, which is disposed symmetrically to the second inclined surface 52b with respect to the third surface PL3, which is perpendicular to both the first surface 51 and the second surface 52d. In a case where the conduction block 5 has the second inclined surface 52b and the fourth inclined surface 52d, the second displacement amount indicating the degree to which the tip end *P* of the wire W is displaced from the imaginary center axis AX in the second direction *DR2* can be identified using both the second inclined surface 52b and the fourth inclined surface 52d. In this case, the accuracy of the second displacement amount calculated by the control device 7 is improved.

In the example illustrated in FIG. 10, the inclined surface 52 is disposed in a quadrangular frame shape in a view from a direction perpendicular to the first surface 51 (in other words, in a view from a direction along the imaginary center axis AX of the wire W). Alternatively, as illustrated in FIG. 11, the inclined surface 52 may be disposed in an annular shape in a view from the direction perpendicular to the first surface 51 (in other words, in a view from the direction along the imaginary center axis AX of the wire W). In the example illustrated in FIG. 11, the conduction block 5 has a substantially truncated cone shape.

### (Table Device 2)

In the example illustrated in FIG. 12, the table device 2 has: an upper surface 2u, to which the workpiece D is attached; and a side surface 2t, on which the conduction block 5 is disposed. In a case where the surface to which the workpiece D is attached and the surface to which the conduction block 5 is attached are different from each other, the conduction block 5 does not interfere with the attachment of the workpiece D to the table device 2. Also, in a case where the surface to which the workpiece D is attached and the surface to which the conduction block 5 is attached are different from each other, the shape or size of the workpiece D attached to the table device 2 is not restricted by the presence of the conduction block 5.

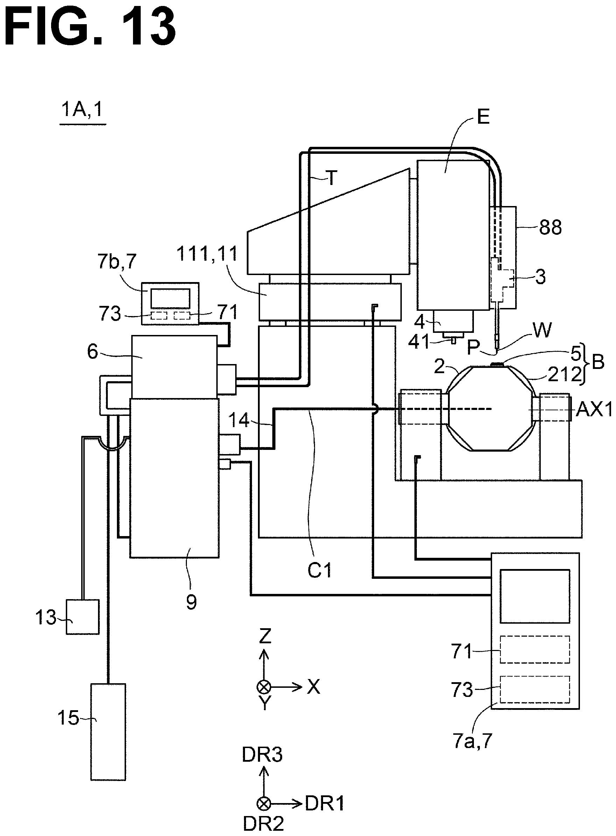

In the examples illustrated in FIGs. 12 and 13, the table device 2 on which the conduction block 5 is disposed is tiltable (in other words, tiltably movable) about a first axis AX1 so as to make the conduction block 5 closer to the first machining head 3. In the example illustrated in FIG. 13, when the table device 2 is tilted about the first axis AX1, the conduction block 5 approaches the tip end *P* of the wire W supported by the first machining head 3. In this case, the tip end *P* of the wire W can be brought into contact with the conduction block 5 without largely moving the first machining head 3. Also, after the position of the tip end *P* of the wire W has been identified, it is possible to rotate the table device 2 about the first axis AX1 so as to return the table device 2 to its original position. This enables the conduction block 5 to move to a retreat position relatively separated from the first machining head 3 (see FIG. 12). In this case, the conduction block 5 does not interfere with the additive machining performed using the first machining head 3. Also, adhesion of a molten material generated from the tip end *P* of the wire W to the conduction block 5 is eliminated or minimized.

In the example illustrated in FIG. 15, the machine tool 1A includes: a first support portion 23, which supports the table device 2; a second support portion 25, which supports the first support portion 23 tiltably about the first axis AX1; and a first drive device 113a, which tilts the first support 23 about the first axis AX1.

In the example illustrated in FIG. 15, the table device 2 includes: a movable portion 21, which moves together with the workpiece D; a first support portion 23, which supports the movable portion 21 rotatably about a second axis AX2; and a bearing 24, which is disposed between the movable portion 21 and the first support portion 23. It is to be noted that in the example illustrated in FIG. 15, the second axis AX2 is perpendicular to the first axis AX1.

In the example illustrated in FIG. 15, when the tip end *P* of the wire W and the conduction block 5 come into contact with each other, the current supplied from the power supply device 13 flows while bypassing the bearing 24, which is disposed between the movable portion 21 and the first support portion 23. In this case, electrolytic corrosion of the bearing 24 is eliminated or minimized. In the example illustrated in FIG. 15, when the tip end *P* of the wire W and the conduction block 5 come into contact with each other, the current supplied from the power supply device 13 flows through the wire W, the conduction block 5, the pallet 212, the slip ring 26, and the cable 14, and the current does not flow through the bearing 24.

In the example illustrated in FIG. 15, the conduction block 5 is disposed on the movable portion 21 of the table device 2.In this case, when the movable portion 21 to which the workpiece D is attached moves with respect to the first support portion 23, the conduction block 5 also moves with respect to the first support portion 23 together with the movable portion 21. For example, when the movable portion 21 rotates about the second axis AX2 with respect to the first support portion 23, the conduction block 5 also rotates about the second axis AX2 with respect to the first support portion 23.

In the example illustrated in FIG. 15, the table device 2 includes a slip ring 26, which rotates with respect to the end (for example, a brush) of the cable 14 while being in contact with the end of the cable 14. The slip ring 26 is attached to the pallet 212 via a fixing member 27, such as a center cap. In the example illustrated in FIG. 15, the slip ring 26 is attached to a central portion of the pallet 212 via the fixing member 27.

In the example illustrated in FIG. 15, the movable portion 21 includes: a table member 210, which is supported by the first support part 23 rotatably about the second axis AX2; and the pallet 212, which is attached to the table member 210. The workpiece D is attached to the pallet 212 (more specifically, the upper surface of the pallet 212). In the example illustrated in FIG. 15, the conduction block 5 is disposed on the pallet 212 of the table device 2 (more specifically, on the side surface of the pallet 212). Alternatively, the conduction block 5 may be disposed on the table member 210 (for example, a side surface of the table member 210).

### (Wire Supply Device 6)

As illustrated in FIG. 12, the machine tool 1A may include the wire supply device 6. The wire supply device 6 changes the protruding length of the wire W protruding from the first machining head 3 by supplying the wire W. During additive machining, the wire supply device 6 supplies the wire W so that the protrusion length of the wire W is not shortened due to melting of the tip end *P* of the wire W.

The wire supply device 6 may supply the wire W in order to correct the position of the tip end *P* of the wire W after the position of the tip end *P* of the wire W has been identified. The wire supply device 6 may also pull back the wire W in order to correct the position of the tip end *P* of the wire W after the position of the tip end *P* of the wire W has been identified. In other words, the wire supply device 6 may be capable of selectively performing supply of the wire W and pull-back of the wire W in order to correct the position of the tip end *P* of the wire W.

In a case where the machine tool 1A includes the wire supply device 6, the position of the tip end *P* of the wire W can be physically corrected by supplying the wire W or pulling back the wire W.

In the example illustrated in FIG. 12, the wire supply device 6 is disposed outside the first machining head 3. Alternatively, at least a part of the wire supply device 6 may be disposed inside the first machining head 3. Alternatively or additionally, at least a part of the wire supply device 6 may be disposed in a tube T, which defines an inner space through which the wire W passes.

In the example illustrated in FIG. 12, the wire supply device 6 and the first machining head 3 are connected via the tube T, which has a curved portion in at least a part of the tube T. In this case, when the wire W is supplied to the first machining head 3 through the tube T, there is a possibility that the wire W has a bending tendency. Also, when the wire W wound around the bobbin is supplied to the first machining head 3, the wire W already has a bending tendency.

### (First Machining Head 3)

In the example illustrated in FIG. 4, the first machining head 3 has a first passage 33, through which the wire W passes. In the example illustrated in FIG. 4, the center axis of the first passage 33 coincides with the imaginary center axis AX of the wire W. In a case where the first passage 33 disposed in the first machining head 3 is a linear passage, the bending tendency of the wire W is alleviated. In other words, when the wire W passes through the linear first passage 33, the wire W is straightened so that the bending of the wire W is reduced. In the example illustrated in FIG. 4, the first machining head 3 has the tip opening OP. The part of the wire W supported by the first machining head 3 protrudes to the outside of the first machining head 3 through the tip opening OP.

In the example illustrated in FIG. 4, the first machining head 3 has a second passage 35, through which the shield gas passes. The second passage 35 is disposed so as to surround the first passage 33. The second passage 35 is preferably an annular passage disposed concentrically with the first passage 33. In the example illustrated in FIG. 4, the tip opening OP functions as a gas discharge opening that discharges shield gas (for example, inert gas). The shield gas protects the molten material generated from the tip end *P* of the wire W and typically prevents oxidation of the molten material. In the example illustrated in FIG. 12, the shield gas is supplied from the shield gas supply device 15 to the first machining head 3 via a gas supply pipe 151.

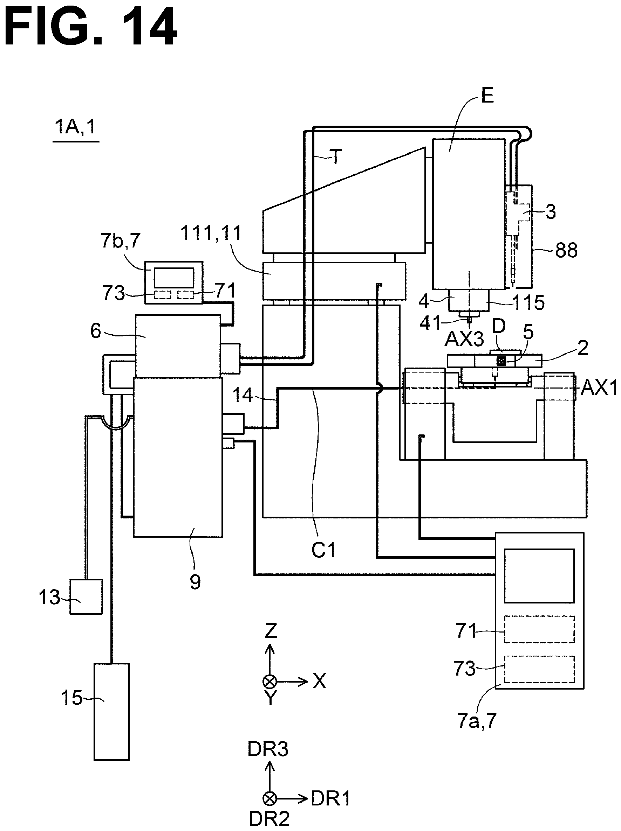

In the example illustrated in FIG. 12, the first machining head 3 is attached to a head mount E. In the example illustrated in FIG. 12, the head mount E supports the first machining head 3 such that the first machining head 3 is movable with respect to the second machining head 4 between an advance position and a retreat position. With the first machining head 3 at the advance position (see FIG. 12), the machine tool 1A is able to perform additive machining using the first machining head 3. In contrast, with the first machining head 3 at the retreat position (see FIG. 14), the machine tool 1A is able to perform cutting using the tool 41, which is supported by the second machining head 4. By performing cutting using the second machining head 4 with the first machining head 3 maintained at the retreat position, the first machining head 3 does not interfere with the cutting. Also, cutting chips are prevented from adhering to the first machining head 3. The head mount E may be provided with a housing 88, which accommodates the first machining head 3 at the retreat position. When the first machining head 3 moves from the retreat position to the advance position, the distal end of the first machining head 3 (or the entire first machining head 3) is exposed to the outside of the housing 88.

### (Cooling Device 9)

As illustrated in FIG. 12, the machine tool 1A may include a cooling device 9, which cools the first machining head 3. The cooling device 9 supplies cooling liquid to the first machining head 3 via a cooling liquid supply pipe disposed between the cooling device 9 and the first machining head 3.

### (Second Machining Head 4)

In the example illustrated in FIG. 14, the second machining head 4 supports the tool 41 rotatably about a third axis AX3. Also, the machine tool 1A includes a tool drive device 115, which rotates the tool 41 about the third axis AX3. When the tool 41 rotates about the third axis AX3 with the tool 41 in contact with the workpiece D, the workpiece D is cut by the tool 41.

In the example illustrated in FIG. 14, both the first machining head 3 and the second machining head 4 are supported by the head mount E. In this case, by moving the head mount E, both the first machining head 3 and the second machining head 4 can be moved. This ensures that it is not necessary to separately prepare a drive system for moving the first machining head 3 and a drive system for moving the second machining head 4. It is to be noted, however, that the first embodiment will not exclude the mode in which a drive system for moving the first machining head 3 and a drive system for moving the second machining head 4 are separately prepared.

### (Drive Device 11 and Control Device 7)

The machine tool 1A includes a drive device 11 and a control device 7, which controls the drive device 11.

In the example illustrated in FIG. 12, the drive device 11 includes: a machining-head drive device 111, which moves the first machining head 3 (or the head mount E to which the first machining head 3 and the second machining head 4 are attached); and a table drive device 113, which moves the entire table device 2 or a part of the table device 2. Alternatively, the drive device 11 may include only one of the machining-head drive device 111 and the table drive device 113.

In the example illustrated in FIG. 12, the machining-head drive device 111 may be a drive device capable of moving the first machining head 3 (or the head mount E) three-dimensionally. More specifically, the machining-head drive device 111 may be capable of moving the first machining head 3 along the Z axis, moving the first machining head 3 along the X axis, and moving the first machining head 3 along the Y axis.

As illustrated in FIG. 15, the table drive device 113 may include: the first drive device 113a, which tilts the entire table device 2 or the entire or a part of the table device 2 about the first axis AX1; and a second drive device 113b, which rotates the entire table device 2 or a part of the table device 2 about the second axis AX2. Alternatively, the table drive 113 may comprise only one of the first drive device 113a and the second drive device 113b. The first drive device 113a may include a stator disposed on the second support portion 25 and a rotor disposed on the first support portion 23. The second drive device 113b may include a stator disposed on the first support portion 23 and a rotor disposed on the movable portion 21 (more specifically, the table member 210).

In the example illustrated in FIG. 12, the control device 7 controls the operation of the machine tool 1A. For example, the control device 7 controls the machining-head drive device 111 to move the first machining head 3. Alternatively or additionally, the control device 7 controls the table drive device 113 to rotate the movable portion 21 of the table device 2 about the first axis AX1 or the second axis AX2.

The control device 7 may control the wire supply device 6 to make the wire W protrude from the first machining head 3. The control device 7 may also control the wire supply device 6 to pull back the wire W to the first machining head 3. The control device 7 may also control the power supply device 13 to change the voltage applied between the wire W and the table device 2.

In the example illustrated in FIG. 12, the control device 7 includes: a first control device 7a, which controls the drive device 11; and a second control device 7b, which controls the wire supply device 6. Alternatively, the drive device 11 and the wire supply device 6 may be controlled by one control device. In other words, the number of control devices that control the plurality of components of the machine tool 1A may be one or may be two or more.

The control device 7 includes: a computer 71, which executes a program; and a storage device 73. For example, a program executed by the computer 71 is stored in the storage device 73. Additionally, data may be stored in the storage device 73.

### (Outline of Control Mode and Operation of Machine Tool 1A)

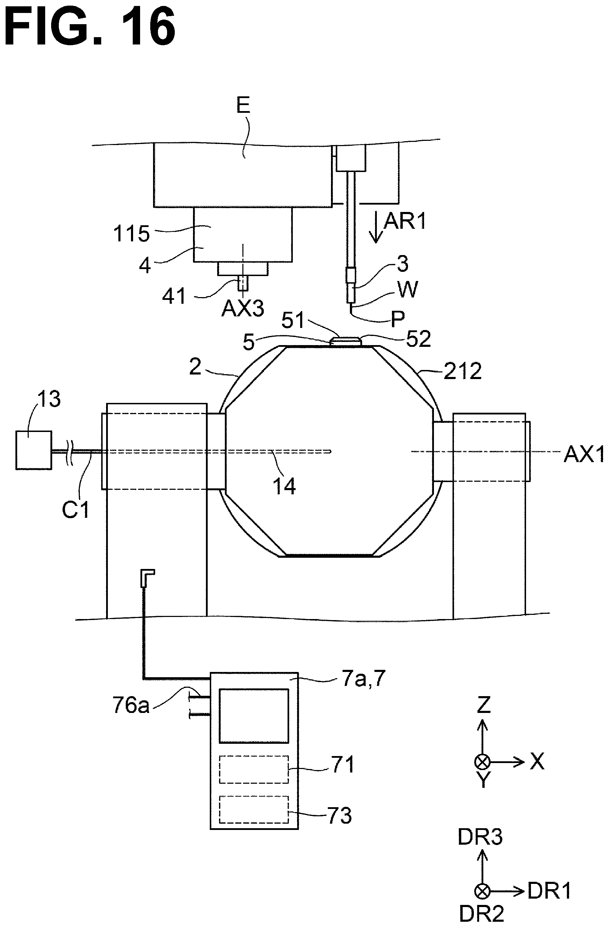

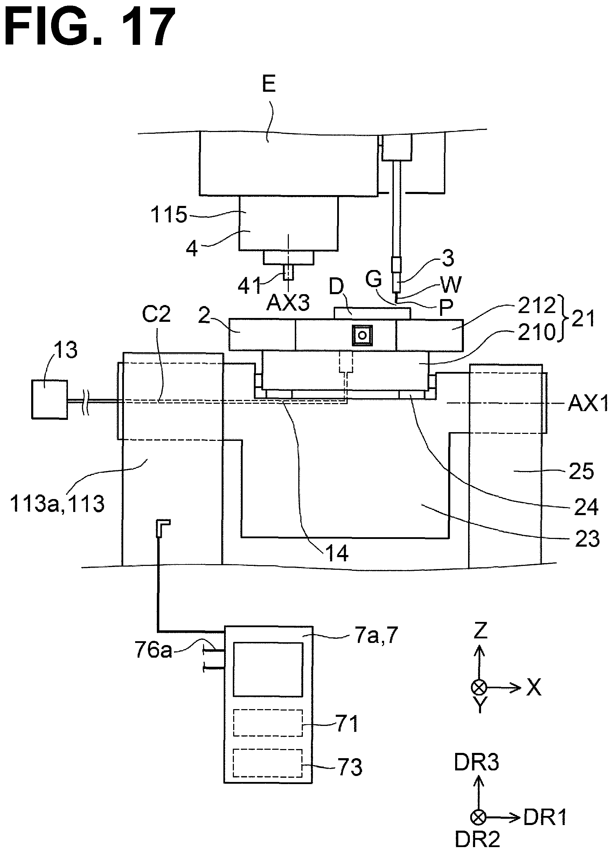

In the examples illustrated in FIGs. 16 and 17, the control device 7 is capable of selectively executing a first control mode and a second control mode. FIG. 16 illustrates a state in which the control device 7 executes the first control mode, and FIG. 17 illustrates a state in which the control device 7 executes the second control mode.

### (First Control Mode)

The first control mode is a mode in which contact between the tip end *P* of the wire W and the conduction block 5 is detected in response to the flow of current through the first electric circuit C1 including the wire W, the conduction block 5, and the cable 14 (the a current flowing through the first electric circuit C1 during the first control mode will be hereinafter referred to as "first current"). The first electric circuit C1 includes, for example, the power supply device 13, the wire W, the conduction block 5, the pallet 212, the slip ring 26 (see FIG. 15, if necessary), and the cable 14.

The detection of the contact between the tip end *P* of the wire W and the conduction block 5 is performed based on the flow of the first current (in other words, short-circuit current) through the first electric circuit C1 including the wire W and the conduction block 5. For example, the control device 7 monitoring the power supply device 13 receives, from the power supply device 13, a signal indicating that the first current (in other words, a short-circuit current) is flowing through the first electric circuit C1. In response to the control device 7 receiving this signal, the control device 7 may detect contact between the tip end *P* of the wire W and the conduction block 5. Alternatively, from a sensor S (if necessary, see FIG. 15) such as a current sensor disposed in the first electric circuit C1, the control device 7 receives a signal indicating that the first current (in other words, a short-circuit current) is flowing through the first electric circuit C1. In response to the control device 7 receiving this signal, the control device 7 may detect contact between the tip end *P* of the wire W and the conduction block 5.

While the first control mode is being executed, the control device 7 may transmit a control command to the drive device 11 through a signal line 76a. The drive device 11, receiving the control command from the control device 7, moves the first machining head 3 with respect to the conduction block 5 so that the tip end *P* of the wire W supported by the first machining head 3 contacts the conduction block 5 (moving step). For example, the drive device 11 moves the first machining head 3 in the direction indicated by an arrow AR1 in FIG. 16. In response to receiving a signal indicating that the first current is flowing through the first electric circuit C1 from the first electric circuit C1 (more specifically, the power supply device 13 or the above-described sensor S), the control device 7 detects that the tip end *P* of the wire W supported by the first machining head 3 has come into contact with the conduction block 5. More specifically, the signal that the control device 7 receives from the first electric circuit C1 changes when a first state in which the tip end *P* of the wire W supported by the first machining head 3 is not in contact with the conduction block 5 is switched to a second state in which the tip end *P* of the wire W supported by the first machining head 3 is in contact with the conduction block 5. Based on the change in the signal, the control device 7 determines that the tip end *P* of the wire W supported by the first machining head 3 has come into contact with the conduction block 5. The control device 7, when executing the first control mode, may transmit a control command to the power supply device 13. The power supply device 13, receiving the control command, applies a first voltage between the wire W and the cable 14.

While the first control mode is being executed, the control device 7 identifies the timing at which the first electric circuit C1 is switched from the open state to the closed state, in other words, the timing at which the tip end *P* of the wire W and the conduction block 5 are brought into contact with each other (timing identifying step). Also while the first control mode is being executed, the control device 7 calculates the actual position of the first machining head 3 at the above-described timing (position calculation step). The control device 7 stores the calculated actual position (in other words, position data) of the first machining head 3 in the storage device 73.

### (Position Displacement Amount Calculation Step)

After executing the first control mode, the control device 7 may calculate, based on the actual position *F* of the first machining head 3 at the above-described timing and based on the position of the conduction block 5, a position displacement amount between the actual position of the tip end *P* of the wire W and the imaginary position *P0* of the tip end of the wire W (position displacement amount calculation step).

A first example of the position displacement amount calculation step will be described by referring to FIG. 5.

In the example illustrated in FIG. 5, the tip end *P* of the wire W is in contact with the first surface 51 of the conduction block 5. In this case, at the above-described timing identifying step, a first timing at which the tip end *P* of the wire W contacts the first surface 51 of the conduction block 5 is identified. The control device 7 also calculates the actual position *F* of the first machining head 3 at the first timing, and stores the actual position *F* in the storage device 73.

In the example illustrated in FIG. 5, based on the actual position *F* of the first machining head 3 at the first timing and the position of the first surface 51 of the conduction block 5 at the first timing, the control device 7 calculates the position displacement amount, *V*, between the actual position of the tip end *P* of the wire W and the imaginary position *P0* of the tip end of the wire W in the direction along the imaginary center axis AX (in other words, the direction perpendicular to the first surface 51).

For example, in the example illustrated in FIG. 5, based on the actual position *F* (Z coordinate: *Z1*) of the first machining head 3 at the first timing and the position (Z coordinate: *Ze*) of the first surface 51 at the first timing, the control device 7 calculates the protruding length *L1* (= *Z1* - *Ze*) of the wire W in the direction along the imaginary center axis AX.

In the example illustrated in FIG. 5, based on the difference between the target value *Lt* of the protruding length of the wire and the calculated protruding length *L1* of the wire W, the control device 7 calculates the position displacement amount *V* (= *Lt - L1*) between the actual position of the tip end *P* of the wire W and the imaginary position *P0* of the tip end of the wire W in the direction along the imaginary center axis AX.

A second example of the position displacement amount calculation step will be described by referring to FIG. 6.

In the example illustrated in FIG. 6, the tip end *P* of the wire W is in contact with the first inclined surface 52a of the conduction block 5. In this case, at the above-described timing identifying step, a second timing at which the tip end *P* of the wire W contacts the first inclined surface 52a of the conduction block 5 is identified. Also, the control device 7 calculates the actual position *F* of the first machining head 3 at the second timing, and stores the actual position *F* in the storage device 73.

In the example illustrated in FIG. 6, based on the actual position *F* of the first machining head 3 at the second timing and the position of the conduction block 5 at the second timing (more specifically, the position of the first inclined surface 52a), the control device 7 calculates a first position displacement amount *V1* between the actual position of the tip end *P* of the wire W and the imaginary position *P0* of the tip end of the wire W in the direction parallel to the first direction *DR1* (in other words, first displacement amount indicating the degree to which the tip end *P* of the wire W is displaced from the imaginary center axis AX in the first direction *DR1*).

In the example illustrated in FIG. 6, the coordinates of the actual position *F* of the first machining head 3 at the second timing are (*X2*, *Y2*, *Z2*)*.*

The control device 7 calculates the coordinates (*X2*, *Y2*, *Z2 - Lt*) of the imaginary position *P0* of the tip end of the wire W based on the coordinates of the actual position *F* of the first machining head 3 and the target value *Lt* of the protruding length of the wire. The control device 7 calculates the coordinates (*Xc*, *Y2*, *Z2 - Lt*) of an intersection point of the first inclined surface 52a and a straight line *N1,* which passes through the imaginary position *P0* and is parallel to the X axis.

Based on the difference between the X coordinate (*Xc*) of the intersection point and the X coordinate (*X2*) of the actual position F of the first machining head 3 or the X coordinate (*X2*) of the imaginary position of the tip end of the wire W, the control device 7 calculates the first position displacement amount *V1* (= *Xc - X2*) between the actual position of the tip end *P* of the wire W and the imaginary position *P0* of the tip end of the wire W in the direction parallel to the first direction *DR1.*It is to be noted that in a case where the protruding length *L1* of the wire W is calculated in advance (see the above-described first example), the "protruding length *L1* of the wire W" may be used instead of the "target value *Lt* of the protruding length of the wire" in the calculation of the first position displacement amount *V1* in the second example.

A third example of the position displacement amount calculation step will be described by referring to FIG. 7.

In the example illustrated in FIG. 7, the tip end *P* of the wire W is in contact with the second inclined surface 52b of the conduction block 5. In this case, at the above-described timing identifying step, a third timing at which the tip end *P* of the wire W contacts the second inclined surface 52b of the conduction block 5 is identified. Also, the control device 7 calculates the actual position *F* of the first machining head 3 at the third timing, and stores the actual position *F* in the storage device 73.

In the example illustrated in FIG. 7, based on the actual position *F* of the first machining head 3 at the third timing and the position of the conduction block 5 at the third timing (more specifically, the position of the second inclined surface 52b), the control device 7 calculates a second position displacement amount *V2* between the actual position of the tip end *P* of the wire W and the imaginary position *P0* of the tip end of the wire W in a direction parallel to the second direction *DR2*.

In the example illustrated in FIG. 7, the coordinates of the actual position *F* of the first machining head 3 at the third timing are (*X3*, *Y3*, *Z3*)*.*

The control device 7 calculates the coordinates (*X3*, *Y3*, *Z3 - Lt*) of the imaginary position *P0* of the tip end of the wire W based on the coordinates of the actual position *F* of the first machining head 3 and the target value *Lt* of the protruding length of the wire. The control device 7 calculates coordinates (*X3*, *Yc, Z3 - Lt*) of an intersection point of the second inclined surface 52b and a straight line N2, which passes through the imaginary position *P0* and is parallel to the Y axis.

Based on the difference between the Y coordinate (*Yc*) of the intersection point and the Y coordinate (*Y3*) of the actual position *F* of the first machining head 3 or the Y coordinate (*Y3*) of the imaginary position *P0* of the tip end of the wire W, the control device 7 calculates the second position displacement amount *V2* (= *Yc* - *Y3*) between the actual position of the tip end *P* of the wire W and the imaginary position *P0* of the tip end of the wire W in the direction parallel to the second direction *DR2*.It is to be noted that in a case where the protruding length L1 of the wire W is calculated in advance (see the above-described first example), the "protruding length *L1* of the wire W" may be used instead of the "target value *Lt* of the protruding length of the wire" in the calculation of the second position displacement amount *V2* in the third example.

A fourth example of the position displacement amount calculation step will be described by referring to FIG. 18.

In the example illustrated in FIG. 18, the tip end *P* of the wire W contacts the first inclined surface 52a of the conduction block 5, and then the tip end *P* of the wire W contacts the third inclined surface 52c of the conduction block 5. In this case, at the above-described timing identifying step, the second timing at which the tip end *P* of the wire W contacts the first inclined surface 52a of the conduction block 5 is identified, and a fourth timing at which the tip end *P* of the wire W contacts the third inclined surface 52c of the conduction block 5 is identified. Also, the control device 7 calculates the actual position *F* of the first machining head 3 at the second timing and an actual position *F'* of the first machining head 3 at the fourth timing, and stores the actual position *F* and the actual position *F*' in the storage device 73.

In the example illustrated in FIG. 18, the control device 7 calculates the first position displacement amount *V1* between the actual position of the tip end *P* of the wire W and imaginary position *P0* of the tip end of the wire W in the direction parallel to first direction *DR1* at least based on the actual position *F* of the first machining head 3 at the second timing and the position of the conduction block 5 (more specifically, based on the actual position *F* of the first machining head 3 at the second timing, the actual position *F'* of the first machining head 3 at the fourth timing, and the position of the second surface PL2 of the conduction block 5). It is to be noted that in FIG. 18, the second surface PL2 is a plane of symmetry that defines the relationship of symmetry between the first inclined surface 52a and the third inclined surface 52c.

In the example illustrated in FIG. 18, the coordinates of the actual position *F* of the first machining head 3 at the second timing are (*X2*, *Y2*, *Z2*), and the coordinates of the actual position *F'* of the first machining head 3 at the fourth timing are (*X2'*, *Y2, Z2*)*.* Also in the example illustrated in FIG. 18, the X coordinate of the second surface PL2 is *Xe.*

In the example illustrated in FIG. 18, the control device 7 calculates the X coordinate (= (*X2* + *X2'*)/2) of a first intermediate point, which is an intermediate point between the actual position *F* of the first machining head 3 at the second timing and the actual position *F'* of the first machining head 3 at the fourth timing. The X coordinate of the first intermediate point coincides with the X coordinate of the imaginary position *P0* of the tip end of the wire W when the first machining head 3 is at the first intermediate point.

The X coordinate of a second intermediate point, which is an intermediate point between the actual position of the tip end *P* of the wire W at the second timing and the actual position of the tip end *P* of the wire W at the fourth timing is the same as the X coordinate (*Xe*) of the second surface PL2. Further, the X coordinate of the second intermediate point coincides with the X coordinate of the actual position of the tip end *P* of the wire W when the first machining head 3 is at the first intermediate point.

From the description above, based on the difference between the X coordinate (*Xe*) of the second intermediate point and the X coordinate (= (*X2* + *X2'*)/2) of the first intermediate point, the control device 7 calculates the first position displacement amount *V1* (= *Xe* - (*X2* + *X2'*)/2) between the actual position of the tip end *P* of the wire W and the imaginary position P0 of the tip end of the wire W in the direction parallel to the first direction *DR1.*

A fifth example of the position displacement amount calculation step will be described by referring to FIG. 19.

In the example illustrated in FIG. 19, the tip end *P* of the wire W contacts the second inclined surface 52b of the conduction block 5, and then the tip end *P* of the wire W contacts the fourth inclined surface 52d of the conduction block 5. In this case, at the above-described timing identifying step, the third timing at which the tip end *P* of the wire W contacts the second inclined surface 52b of the conduction block 5 is identified, and a fifth timing at which the tip end *P* of the wire W contacts the fourth inclined surface 52d of the conduction block 5 is identified. Also, the control device 7 calculates the actual position *F* of the first machining head 3 at the third timing and an actual position *F'* of the first machining head 3 at the fifth timing, and stores the actual position *F* and the actual position *F'* in the storage device 73.

In the example illustrated in FIG. 19, the control device 7 calculates the second position displacement amount *V2* between the actual position of the tip end *P* of the wire W and the imaginary position *P0* of the tip end of the wire W in the direction parallel to the second direction *DR2* at least based on the actual position *F* of the first machining head 3 at the third timing and the position of the conduction block 5 (more specifically, based on the actual position *F* of the first machining head 3 at the third timing, the actual position *F'* of the first machining head 3 at the fifth timing, and the position of the third surface PL3 of the conduction block 5). It is to be noted that in FIG. 19, the third surface PL3 is a plane of symmetry that defines the relationship of symmetry between the second inclined surface 52b and the fourth inclined surface 52d.

In the example illustrated in FIG. 19, the coordinates of the actual position *F* of the first machining head 3 at the third timing are (*X3*, *Y3*, *Z3*), and the coordinates of the actual position *F'* of the first machining head 3 at the fifth timing are (*X3*, *Y3'*, *Z3*)*.* In the example illustrated in FIG. 19, the Y coordinate of the third surface PL3 is *Ye.*

In the example illustrated in FIG. 19, the control device 7 calculates the Y coordinate (= (*Y3* + *Y3'*)/2) of a third intermediate point, which is an intermediate point between the actual position *F* of the first machining head 3 at the third timing and the actual position *F' of* the first machining head 3 at the fifth timing. The Y coordinate of the third intermediate point coincides with the Y coordinate of the imaginary position *P0* of the tip end of the wire W when the first machining head 3 is at the third intermediate point.

The Y coordinate of a fourth intermediate point, which is an intermediate point between the actual position of the tip end *P* of the wire W at the third timing and the actual position of the tip end *P* of the wire W at the fifth timing is the same as the Y coordinate (*Ye*) of the third surface PL3. Further, the Y coordinate of the fourth intermediate point coincides with the Y coordinate of the actual position of the tip end *P* of the wire W when the first machining head 3 is at the third intermediate point.

From the description above, based on the difference between the Y coordinate (*Ye*) of the fourth intermediate point and the Y coordinate (= (*Y3* + *Y3'*)/2) of the third intermediate point, the control device 7 calculates the second position displacement amount *V2* (= *Ye* - (*Y3* + *Y3'*)/2) between the actual position of the tip end *P* of the wire W and the imaginary position *P0* of the tip end of the wire W in the direction parallel to the second direction *DR2*.

In the above description, five examples (in other words, five algorithms) of the position displacement amount calculation step have been described. It is to be noted, however, that the algorithm in the position displacement amount calculation step will not be limited to the above-described first to fifth examples. In other words, an algorithm other than the above-described first to fifth examples may be employed as the algorithm in the position displacement amount calculation step.

### (First Position Correction Step)

After the above-described position displacement amount *V* has been calculated, the control device 7 may execute a first position correction step of correcting the position of the tip end *P* of the wire W based on the calculated position displacement amount *V*. For example, the control device 7 transmits a control command corresponding to the calculated position displacement amount *V* to the wire supply device 6. The wire supply device 6, receiving the control command from the control device 7, supplies the wire W by an amount corresponding to the position displacement amount *V* or pulls back the wire W by the amount corresponding to the position displacement amount *V*. In this manner, the protruding length *L1* of the wire W protruding from the first machining head 3 is corrected by an amount corresponding to the position displacement amount *V*.

### (Second Position Correction Step and Third Position Correction Step)

After the above-described first position displacement amount *V1* has been calculated, the control device 7 may, based on the calculated first position displacement amount *V1,* correct the estimated relative position *F0* of the first machining head 3 with respect to the tip end *P* of the wire W in the direction parallel to the first direction *DR1* (second position correction step). In the example illustrated in FIG. 1, it is assumed that the estimated relative position *F0* is corrected in the direction opposite to the first direction *DR1* by the first position displacement amount *V1.* In this case, the control target position of the first machining head 3 controlled by the control device 7 is displaced by the first position displacement amount *V1* in the direction opposite to the first direction *DR1* from the control target position of the first machining head 3 in a state in which the tip end *P* of the wire W is not displaced from the imaginary center axis AX in the first direction *DR1.* In other words, the corrected estimated relative position, *F0'*, approaches the actual position F of the first machining head 3. In this manner, the control device 7 is able to execute the position control of the first machining head 3 in consideration of the fact that the tip end *P* of the wire W is displaced from the imaginary center axis AX in the first direction *DR1* by the first position displacement amount *V1.*

Alternatively or additionally, after the above-described second position displacement amount *V2* has been calculated, the control device 7 may, based on the calculated second position displacement amount *V2*, correct the estimated relative position *F0* of the first machining head 3 with respect to the tip end *P* of the wire W in the direction parallel to the second direction *DR2* (third position correction step).

### (Second Control Mode)

The second control mode is a mode in which additive machining is performed on the workpiece D by supplying current (the current flowing through the second electric circuit C2 during the second control mode will be hereinafter referred to as "second current") from the power supply device 13 to the second electric circuit C2 including the wire W, a gap G (see FIG. 17) between the tip end *P* of the wire W and the workpiece D, and the cable 14. The control device 7 may transmit a control command to the power supply device 13 when executing the second control mode. The power supply device 13, receiving the control command, applies a second voltage between the wire W and the cable 14. The second voltage applied between the wire W and the cable 14 by the power supply device 13 when the control device 7 executes the second control mode may be higher than the first voltage applied between the wire W and the cable 14 by the power supply device 13 when the control device 7 executes the first control mode.

The second electric circuit C2 includes the power supply device 13, the wire W, the gap G between the tip end *P* of the wire W and the workpiece D, the workpiece D, the pallet 212, the slip ring 26 (see FIG. 15, if necessary), and the cable 14. It is to be noted that the conduction block 5 is not included in the second electric circuit C2. In other words, no current flows through the conduction block 5 during the execution of the second control mode.

During the execution of the second control mode, the second current supplied from the power supply device 13 flows through the wire W, the gap G between the tip end *P* of the wire W and the workpiece D, and the cable 14. The flow of the second current through the gap G is realized by a discharge phenomenon between the tip end *P* of the wire W and the workpiece D. The wire W is melted by the heat generated at the time of discharge, and a molten material generated from the tip end *P* of the wire W is added to the workpiece D.

During the execution of the second control mode, the control device 7 may transmit a control command to the drive device 11. The drive device 11, receiving the control command from the control device 7, moves the first machining head 3 with respect to the workpiece D (in other words, the table device 2, which supports the workpiece D). In this manner, an added object having a desired shape can be added to the workpiece D. During the execution of the second control mode, the control device 7 may transmit a control command to the wire supply device 6. The wire supply device 6, receiving the control command from the control device 7, supplies the wire W to the first machining head 3 so that the wire W is fed out of the first machining head 3. In this case, the wire W is fed out of the first machining head 3 by an amount corresponding to the amount of the wire W consumed in additive machining.

In the examples illustrated in FIGs. 16 and 17, the cable 14 functioning as the return path of the first current when the control device 7 executes the first control mode and the cable 14 functioning as the return path of the second current when the control device 7 executes the second control mode are the same. This ensures that it is not necessary to provide dedicated wiring for executing the first control mode, or that the dedicated wiring for executing the first control mode is shortened.

After the position of the tip end *P* of the wire W has been corrected (in other words, after the above-described first position correction step has been executed), the above-described second control mode may be executed so that the molten material generated from the tip end *P* of the wire W exposed from the first machining head 3 is added to the workpiece D, which is supported by the table device 2. In a case where the second control mode is executed after the position of the tip end *P* of the wire W has been corrected, the accuracy of the position or shape of the added object added to the workpiece D is improved.

Alternatively or additionally, after the estimated relative position *F0* of the first machining head 3 with respect to the tip end *P* of the wire W has been corrected (in other words, after the above-described second position correction step and/or the above-described third position correction step have/has been performed), the above-described second control mode may be performed so that the molten material generated from the tip end *P* of the wire W exposed from the first machining head 3 is added to the workpiece D, which is supported by the table device 2. In a case where the second control mode is executed after the estimated relative position *F0* of the first machining head 3 with respect to the tip end *P* of the wire W has been corrected, the accuracy of the position or shape of the added object added to the workpiece D is improved.

### (Third Control Mode)

The control device 7 may be capable of executing a third control mode. The third control mode is executed, for example, after the second control mode has been executed.

The third control mode is a mode in which the workpiece D is cut by driving the tool 41, which is supported by the second machining head 4. As a result of the third control mode being executed, the tool 41, which is supported by the second machining head 4, is driven, and the workpiece D, which is supported by the table device 2 (more specifically, the added object added to the workpiece D by additive machining) is cut by the driven tool 41.

During the execution of the third control mode, the control device 7 transmits a control command to the drive device 11. The drive device 11, receiving the control command from the control device 7, moves the second machining head 4 (for example, the head mount E to which the second machining head 4 is attached) with respect to the workpiece D (in other words, the table device 2, which supports the workpiece D). Also during the execution of the third control mode, the control device 7 transmits a control command to the tool drive device 115. The tool drive device 115, receiving the control command from the control device 7, rotates the tool 41 about the third axis AX3. In this manner, the workpiece D (for example, an added object added to the workpiece D) is cut by the tool 41.

### (Structure of Machine Tool 1A)

In the example illustrated in FIG. 20, the machine tool 1A includes: a base 80, a second support portion 25, which supports the table device 2; a first frame 82, which is movable in a direction parallel to the Y-axis direction with respect to the base 80; a second frame 84, which is movable in a direction parallel to the X-axis direction with respect to the base 80; and the head mount E, which is movable in a direction parallel to the Z-axis direction with respect to the base 80.

In the example illustrated in FIG. 20, the second support portion 25 is fixed to the base 80. Also, the second support portion 25 supports the first support portion 23 tiltably about the first axis AX1. In the example illustrated in FIG. 20, the first support portion 23 supports the table device 2 rotatably about the second axis AX2. In the example illustrated in FIG. 20, the machine tool 1A has two degrees of freedom in its mechanism for supporting the workpiece D.

In the example illustrated in FIG. 20, the base 80 supports the first frame 82 relatively movably in the direction parallel to the Y-axis direction. The first frame 82 supports the second frame 84 relatively movably in the direction parallel to the X-axis direction. The second frame 84 supports the head mount E relatively movably in the direction parallel to the Z-axis direction. In the example illustrated in FIG. 20, the machine tool 1A has three axes of freedom in its mechanism for supporting the first machining head 3 (or the head mount E).

In the example illustrated in FIG. 20, the tool 1A has five degrees of freedom. Also, the machine-tool 1A is a machining center. It is to be noted, however, that in the machine tool 1A according to the first embodiment, the number of degrees of freedom will not be limited to five. The machine tool 1A according to the first embodiment may be a machine tool other than a machining center.

### (Workpiece support device B of Machine Tool)

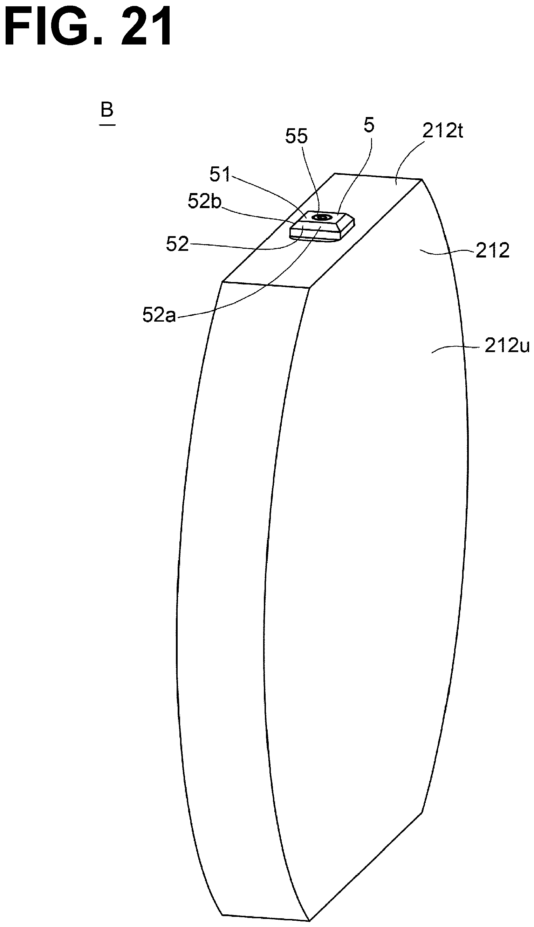

Next, a workpiece support device B of a machine tool 1 according to a second embodiment will be described by referring to FIGs. 1 to 21. FIG. 21 is a schematic perspective view schematically illustrating an example of the workpiece support device B of the machine tool 1 according to the second embodiment.

The workpiece support device B of the machine tool 1 according to the second embodiment is a workpiece support device of a machine tool that includes the first machining head 3, which adds a molten material generated from the tip end *P* of the wire W to the workpiece D. The first machining head 3 of the machine tool 1 supports the wire W in a state in which the tip end *P* of the wire W is exposed. The machine tool 1 may be the machine tool 1A according to the first embodiment, or may be another machine tool. An example of another machine tool is provided with: the first machining head 3, which adds a molten material generated from the tip end *P* of the wire W to the workpiece D; the second machining head 4, which supports the tool 41, which cuts the workpiece D; the drive device 11, which moves the first machining head 3 and/or the second machining head 4; and the power supply device 13, which supplies current to the wire W.

As illustrated in FIG. 21, the workpiece support device B of the machine tool 1 according to the second embodiment includes the pallet 212 and the conduction block 5. The workpiece support device B of the machine tool 1 in the second embodiment may include components other than the pallet 212 and the conduction block 5, in addition to the pallet 212 and the conduction block 5.

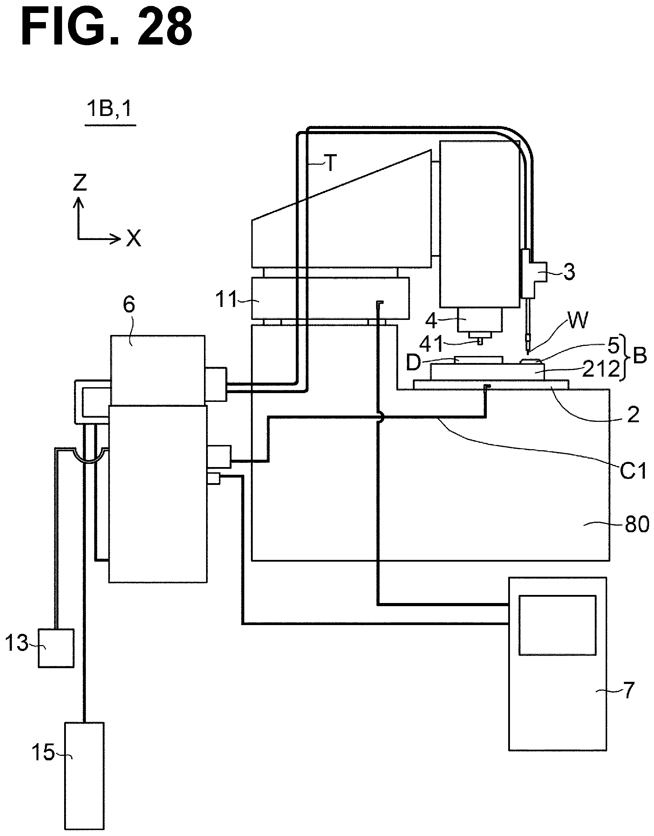

The pallet 212 constitutes a part of the table device 2 of the machine tool 1 and supports a workpiece D, which is an object to be machined. In the example illustrated in FIG. 21, the pallet 212 has: a main surface 212u (for example, an upper surface), which supports the workpiece D; and a side surface 212t, on which the conduction block 5 is disposed. Alternatively, as illustrated in FIG. 28, in the workpiece support device B, the conduction block 5 may be disposed on the main surface (for example, the upper surface) of the pallet 212.

The conduction block 5 identifies the position of the tip end *P* of the wire W supported by the first machining head 3. The conduction block 5 may be attached to the pallet 212. In other words, a first component constituting the conduction block 5 may be attached to a second component constituting the pallet 212. In this case, the first component may be provided in a state of being separated from the second component (in this case, the first component is attached to the second component afterward), or the first component may be provided in a state of being attached to the second component. Alternatively, the conduction block 5 may be integrally formed with the pallet 212.

The conduction block 5 has the first surface 51, which identifies the protruding length *L1* of the wire W protruding from the first machining head 3; and the inclined surface 52, which is disposed so as to be inclined with respect to the first surface 51 and identifies the displacement amount of the tip end *P* of the wire W from the imaginary center axis AX of the wire W. The inclined surface 52 may have: the first inclined surface 52a, which identifies the first displacement amount indicating the degree of displacement of the tip end *P* of the wire W from the imaginary center axis AX of the wire W in the first direction *DR1*; and the second inclined surface 52b, which identifies the second displacement amount indicating the degree of displacement of the tip end *P* of the wire W from the imaginary center axis AX of the wire W in the second direction *DR2*.

The first machining head 3, the pallet 212, the conduction block 5, the table device 2, the first surface 51, and the inclined surface 52 have already been described in detail in the first embodiment. Therefore, repetitive description of these parts and members will be omitted. It is to be noted that the conduction block 5 illustrated in FIG. 21 may be replaced with the conduction block 5 illustrated in any one of FIGs. 5 to 11.

In a state in which the workpiece support device B of the machine tool 1 according to the second embodiment is attached to another component (for example, the table member 210) of the machine tool 1, the conduction block 5 functions as a part of the first electric circuit C1, which is switched from an open state to a closed state by contact between the tip end *P* of the wire W and the conduction block 5. This ensures that the machine tool 1 in which the workpiece support device B according to the second embodiment is incorporated provides effects identical to the effects provided by the machine tool 1A according to the first embodiment.

Also, the workpiece support device B of the machine tool 1 according to the second embodiment includes the pallet 212 and the conduction block 5. With this configuration, the workpiece support device B has a first function of supporting the workpiece D and a second function of identifying the position of the tip end *P* of the wire W. Also in the second embodiment, since both the workpiece D and the conduction block 5 are disposed on the pallet 212, inconsistency is less likely to occur between position information of the conduction block 5 based on the pallet 212 and position information of the workpiece D based on the pallet 212.

Also in the second embodiment, since the conduction block 5 is disposed on the pallet 212, the conduction block 5 is automatically replaced by replacing the pallet 212.

The workpiece support device B of the machine tool 1 according to the second embodiment may be such a workpiece support device of a machine tool that includes the above-described first machining head 3 and the second machining head 4, which supports the tool 41, which cuts the workpiece D. In this case, the pallet 212 consistently supports the workpiece D during additive machining of the workpiece D performed using the first machining head 3 and during cutting of the workpiece D performed using the second machining head 4.

In a case where the pallet 212 supporting the workpiece D during additive manufacturing and the pallet 212 supporting the workpiece D during cutting are the same, the surface of the workpiece D (more specifically, the surface of the added object added to the workpiece D) can be cut into a desired shape with high accuracy in the cutting performed after the additive manufacturing.

### (Further Description of Method of Operating Machine Tool 1A)

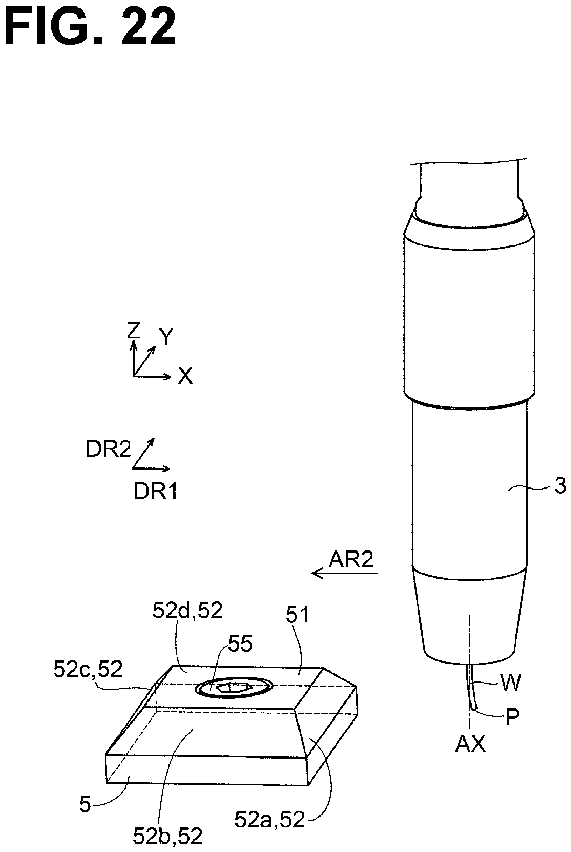

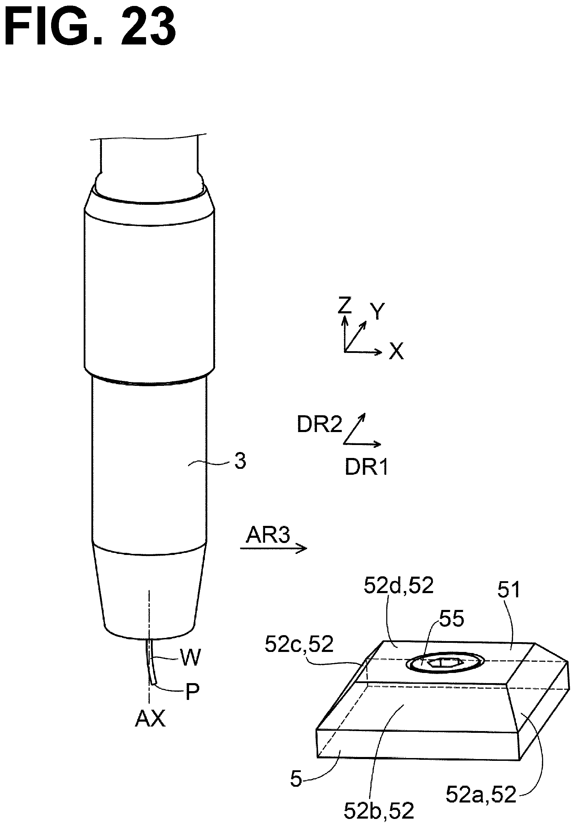

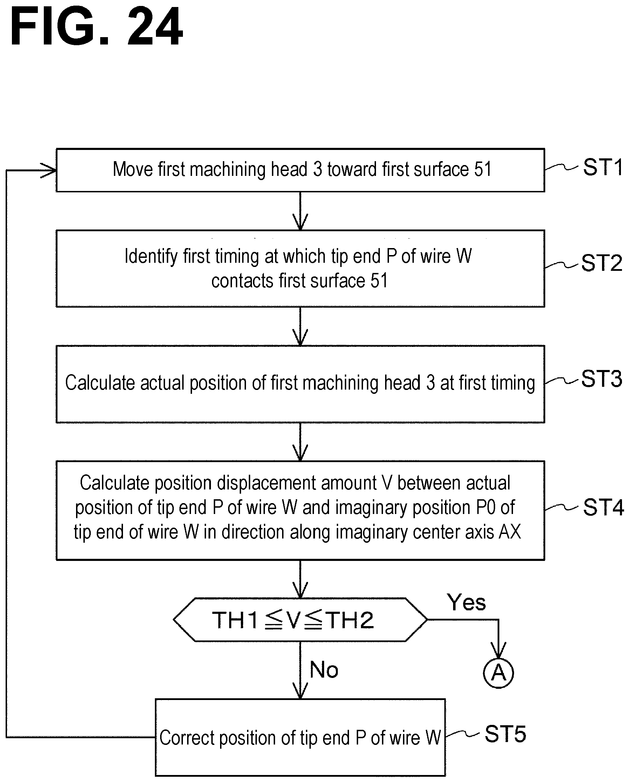

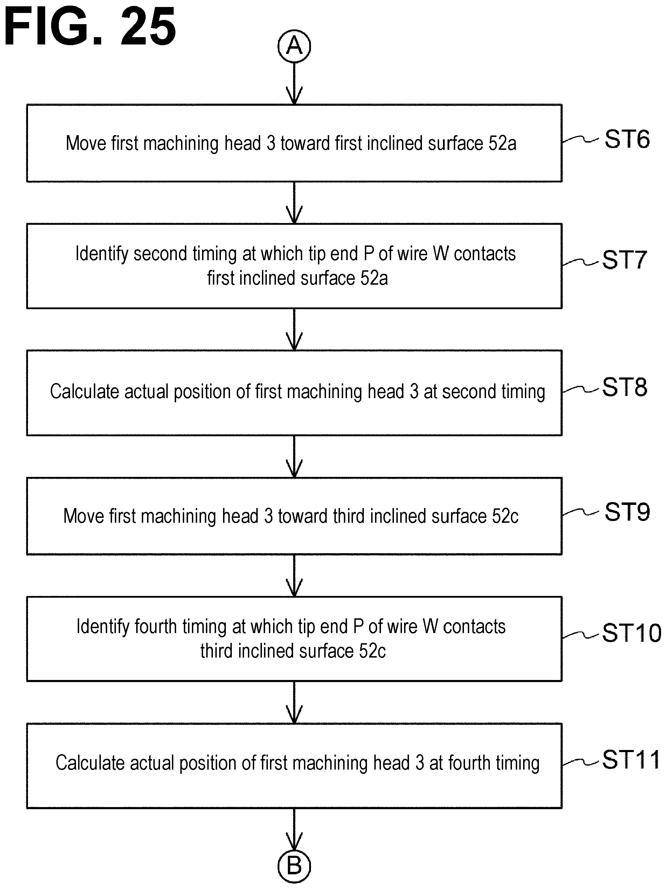

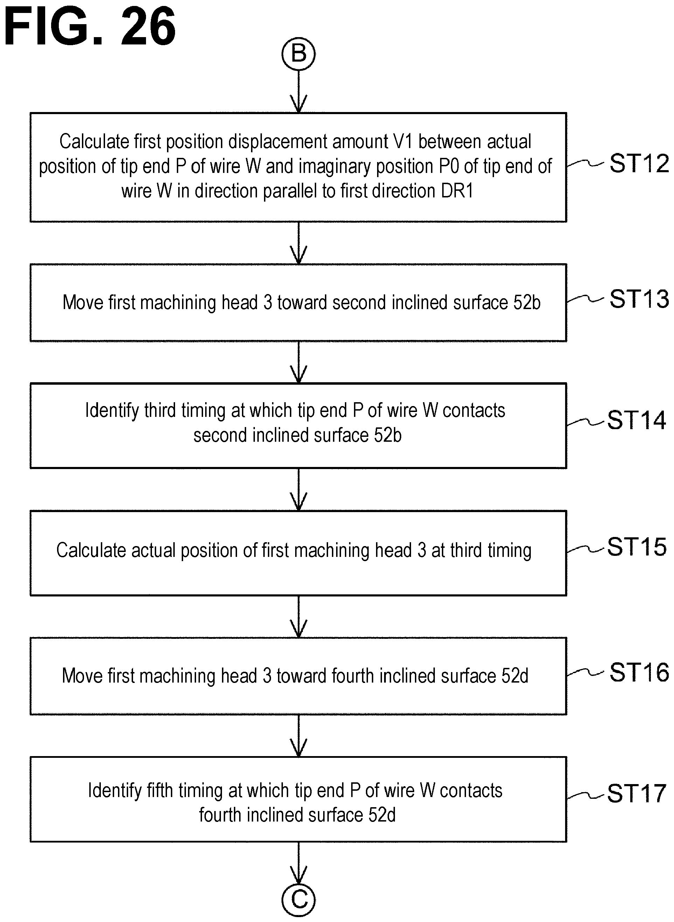

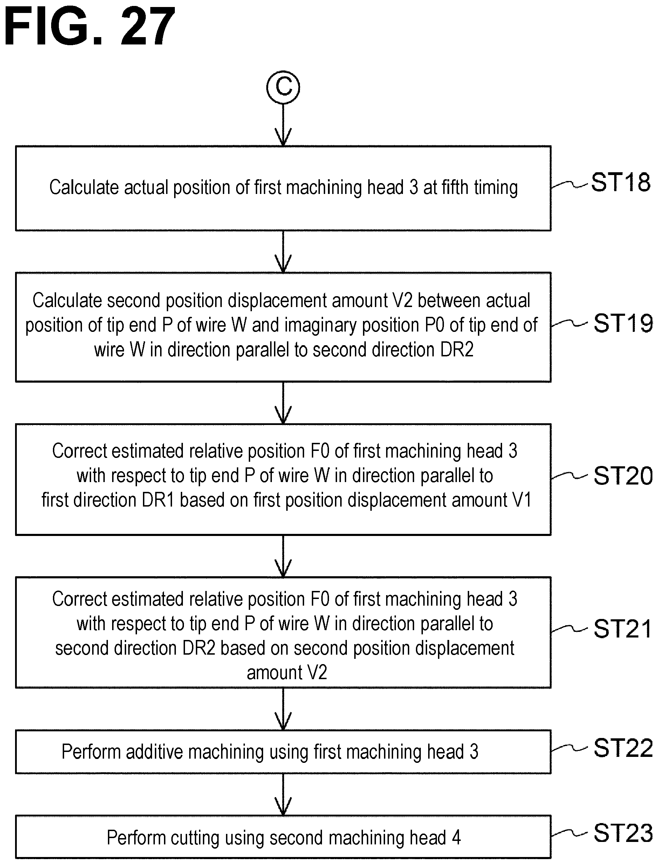

Next, a method of operating the machine tool 1 according to an embodiment will be described by referring to FIGs. 1 to 27. FIGs. 22 and 23 are schematic perspective views schematically illustrating how one step of the method of operating the machine tool 1 according to the embodiment is performed. FIGs. 24 to 27 are flowcharts illustrating examples of the method of operating the machine tool 1 according to the embodiment.

In the method of operating the machine tool 1 according to the embodiment, the machine tool 1 may be the machine tool 1A according to the first embodiment or may be another machine tool.

The machine tool 1 includes: the table device 2, which supports the workpiece D; the first machining head 3, which supports the wire W in a state in which the tip end *P* of the wire W is exposed and adds a molten material generated from the tip end *P* of the wire W to the workpiece D, which is supported by the table device 2; the second machining head 4, which supports the tool 41, which cuts the workpiece D, which is supported by the table device 2; the power supply device 13, which supplies current to the wire W; the conduction block 5, which is disposed on the table device 2 and identifies the position of the tip end *P* of the wire W; the drive device 11, which moves the power supply device 13 with respect to the table device 2 so that the tip end *P* of the wire W exposed from the first machining head 3 and the conduction block 5, which is disposed on the table device 2, are brought into contact with each other; and the first electric circuit C1, which is switched from the open state to the closed state by contact between the tip end *P* of the wire W exposed from the first machining head 3 and the conduction block 5, which is disposed on the table device 2.

As illustrated in FIG. 16, at first step ST1, the first machining head 3 is moved with respect to the conductive block 5 so that the tip end *P* of the wire W contacts the conductive block 5 (more specifically, the first surface 51 of the conductive block 5) (see the arrow AR1 in FIG. 16). First step ST1 is a first moving step.

First step ST1 (first moving step) may include moving the first machining head 3 to a first standby position (sub-step ST1-1). The first standby position is, for example, a position set in advance by the control device 7 such that an extension line of the imaginary center axis AX of the wire W supported by the first machining head 3 intersects the first surface 51 of the conduction block 5.

First step ST1 (first moving step) may also include moving the first machining head 3 from the first standby position toward the first surface 51 of the conduction block 5 in a direction parallel to the imaginary center axis AX of the wire W (sub-step ST1-2). At sub-step ST1-2, the control device 7 transmits a first control command to the drive device 11. The drive device 11, receiving the first control command from the control device 7, moves the first machining head 3 from the first standby position toward the first surface 51 in the direction parallel to the imaginary center axis AX of the wire W.

As illustrated in FIG. 15, in a case where the table device 2, on which the conduction block 5 is disposed, is tiltable about the first axis AX1, the control device 7 may transmit a tilt command to the drive device 11 (more specifically, the first drive device 113a) before executing first step ST1 (first moving step). The first drive device 113a, receiving the tilt command from the control device 7, tilts the table device 2 about the first axis AX1. As a result of the tilting, the conduction block 5, which is disposed on the table device 2, approaches the first machining head 3. The first drive device 113a, receiving the tilt command from the control device 7, may tilt the table device 2 about the first axis AX1 such that the conduction block 5, which is disposed on the side surface of the table device 2, moves upward.

As illustrated in FIGs. 13 and 14, in a case where the first machining head 3 is movable between the retreat position (see FIG. 14) inside the housing 88 and the advance position (see FIG. 13) protruding from the housing 88, the control device 7 may transmit a control command to the head mount E before executing first step ST1 (first moving step). The head mount E, receiving the control command from the control device 7, moves the first machining head 3 from the retreat position to the advance position.

At second step ST2, the first timing at which the first electric circuit C1 switches from the open state to the closed state is identified. Second step ST2 is a first timing identifying step.

At second step ST2 (first timing identifying step), the control device 7 identifies the first timing at which the first electric circuit C1 is switched from the open state to the closed state due to the contact between the tip end *P* of the wire W and the conduction block 5 (more specifically, the first surface 51). More specifically, the control device 7 identifies the first timing at which the first electric circuit C1 is switched from the open state to the closed state based on a change in the signal received from the first electric circuit C1 (for example, the power supply device 13 and the sensor S). For example, in response to receiving, from the first electric circuit C1 (for example, the power supply device 13 and the sensor S), a signal indicating that the first current is flowing through the first electric circuit C1, the control device 7 identifies the first timing at which the first electric circuit C1 is switched from the open state to the closed state.

Second step ST2 (first timing identifying step) is executed during the execution of first step ST1 (first moving step). For example, at second step ST2, when the first timing has been identified by the control device 7, first step ST1 (first moving process) may end. In other words, by the contact between the tip end *P* of the wire W and the conduction block 5, the movement of the first machining head 3 may be automatically stopped, or the function of automatically returning the first machining head 3 to the first standby position may be turned on (in other words, a skip function may be turned on).

At third step ST3, the control device 7 executes a step (first position calculation step) of calculating the actual position of the first machining head 3 at the first timing (that is, the position coordinates of the first machining head 3). The control device 7 stores the position of the first machining head 3 at the first timing in the storage device 73.

It is to be noted that the first machining head 3 is preferably returned to the first standby position after the execution of third step ST3 or before the execution of third step ST3.

At fourth step ST4, the position displacement amount *V* between the actual position of the tip end *P* of the wire W and the imaginary position *P0* of the tip end of the wire W in the direction along the imaginary center axis AX is calculated. Fourth step ST4 is a position displacement amount calculation step.

At fourth step ST4 (position displacement amount calculation step), based on the actual position *F* of the first machining head 3 at the first timing and the position of the conduction block 5 (more specifically, the position of the first surface 51) at the first timing, the control device 7 calculates the position displacement amount *V* between the actual position of the tip end *P* of the wire W and the imaginary position P0 of the tip end of the wire W in the direction along the imaginary center axis AX.

The algorithm for calculating the position displacement amount *V* has already been described in the "first example of the position displacement amount calculation step", described above. Therefore, repetitive description of the algorithm for calculating the position displacement amount *V* will be omitted. It is to be noted that as understood from FIG. 5, the position displacement amount *V* corresponds to the difference between the target value *Lt* of the protruding length of the wire and the protruding length *L1* of the wire.

The control device 7 may use the calculated position displacement amount *V* as a first correction amount *Q.* In this case, the position of the tip end *P* of the wire W is corrected by executing the first position correction step, described later, so that the protruding length *L1* of the wire W protruding from the first machining head 3 approaches the target value *Lt.*

Alternatively, as illustrated in FIG. 24, in a case where the position displacement amount *V* is equal to or greater than a first threshold *TH1* and equal to or smaller than a second threshold *TH2,* in other words, in a case where the difference between the target value *Lt* of the protruding length of the wire and the protruding length *L1* of the wire is within a predetermined range, the control device 7 may execute a next processing (for example, sixth step ST6, described later) without executing the processing of correcting the position of the tip end *P* of the wire W (in other words, fifth step ST5, described later). It is to be noted that in the example illustrated in FIG. 24, the first threshold *TH1* is a negative value, and the second threshold *TH2* is a positive value.

In the example illustrated in FIG. 24, in a case where the above-described position displacement amount *V* is smaller than the first threshold *TH1,* the control device 7 may set the position displacement amount *V* to be the first correction amount *Q.* Also, in a case where the position displacement amount *V* is greater than the second threshold *TH2*, the control device 7 may set the position displacement amount *V* to be the first correction amount *Q.*

At fifth step ST5, the position of the tip end *P* of the wire W in the direction along the imaginary center axis AX of the wire W is corrected. Fifth step ST5 is a first position correction step.

At fifth step ST5 (first position correction step), the control device 7 transmits a control command corresponding to the first correction amount *Q* to the wire supply device 6. The wire supply device 6, receiving the control command from the control device 7, supplies the wire W by an amount corresponding to the first correction amount *Q* or pulls back the wire W by an amount corresponding to the first correction amount *Q.* In this manner, the protruding length *L1* of the wire W protruding from the first machining head 3 is corrected by an amount corresponding to the position displacement amount *V*.

At fifth step ST5, in a case where the position displacement amount *V* (= *Lt - L1*) is a positive value, the wire supply device 6, receiving the control command corresponding to the first correction amount *Q,* may supply the wire W to the first machining head 3 for a time period proportional to the absolute value of the first correction amount *Q.* In this manner, the protruding length *L1* of the wire W protruding from the first machining head 3 approaches the target value *Lt* of the protruding length of the wire.

In contrast, at fifth step ST5, in a case where the position displacement amount *V* (= *Lt* - *L1*) is a negative value, the wire supply device 6 may pull back the wire W from the first machining head 3 for a time period proportional to the absolute value of the first correction amount *Q.* In this manner, the protruding length *L1* of the wire W protruding from the first machining head 3 approaches the target value *Lt* of the protruding length of the wire.

After the position of the tip end *P* of the wire W has been corrected at fifth step ST5, the control device 7 may execute first step ST1 to fourth step ST4 again. Alternatively, after the position of the tip end *P* of the wire W has been corrected at fifth step ST5, the control device 7 may execute sixth step ST6.

As illustrated in FIG. 22, at sixth step ST6, the first machining head 3 is moved with respect to the conduction block 5 so that the tip end *P* of the wire W contacts the first inclined surface 52a of the conduction block 5 (see an arrow AR2 in FIG. 22). Sixth step ST6 is a second moving step.

Sixth step ST6 (second moving step) may include moving the first machining head 3 to a second standby position (sub-step ST6-1). The second standby position is, for example, a position set in advance by the control device 7 such that a straight line passing through the tip end *P* of the wire W supported by the first machining head 3 and parallel to the first direction *DR1* intersects the first inclined surface 52a.

Also, sixth step ST6 (second moving step) may include moving the first machining head 3 from the second standby position toward the first inclined surface 52a of the conduction block 5 in the direction parallel to the first direction *DR1* (sub-step ST6-2). At sub-step ST6-2, the control device 7 transmits a second control command to the drive device 11. The drive device 11, receiving the second control command from the control device 7, moves the first machining head 3 from the second standby position toward the first inclined surface 52a in the direction parallel to the first direction *DR1.*

At seventh step ST7, the second timing at which the first electric circuit C1 is switched from the open state to the closed state is identified. Seventh step ST7 is a second timing identifying step.

At seventh step ST7 (second timing identifying step), the control device 7 identifies the second timing at which the first electric circuit C1 is switched from the open state to the closed state due to the contact between the tip end *P* of the wire W and the first inclined surface 52a of the conduction block 5.

Seventh step ST7 (second timing identifying step) is executed during the execution of sixth step ST6 (second moving step). For example, at seventh step ST7, when the second timing has been identified by the control device 7, sixth step ST6 (second moving step) may end. In other words, the movement of the first machining head 3 may be automatically stopped by the contact between the tip end *P* of the wire W and the conduction block 5, or the function of automatically returning the first machining head 3 to the second standby position may be turned on (in other words, the skip function may be turned on).

At eighth step ST8, the control device 7 executes a step (second position calculation step) of calculating the actual position of the first machining head 3 at the second timing (that is, the position coordinates of the first machining head 3). The control device 7 stores the position of the first machining head 3 at the second timing in the storage device 73.

It is to be noted that the first machining head 3 is preferably returned to the second standby position after the execution of eighth step ST8 or before the execution of eighth step ST8.

At ninth step ST9, the first machining head 3 is moved with respect to the conduction block 5 so that the tip end *P* of the wire W contacts the third inclined surface 52c of the conduction block 5 (see an arrow AR3 in FIG. 23).

Ninth step ST9 may include moving the first machining head 3 to a third standby position (sub-step ST9-1). The third standby position is, for example, a position set in advance by the control device 7 such that a straight line passing through the tip end *P* of the wire W supported by the first machining head 3 and parallel to the first direction *DR1* intersects with the third inclined surface 52c.

Also, ninth step ST9 may include moving the first machining head 3 from the third standby position toward the third inclined surface 52c of the conduction block 5 in the direction parallel to the first direction *DR1* (sub-step ST9-2).

At tenth step ST10, the fourth timing at which the first electric circuit C1 is switched from the open state to the closed state is identified. Tenth step ST10 is a fourth timing identifying step.

At tenth step ST10 (fourth timing identifying step), the control device 7 identifies the fourth timing at which the first electric circuit C1 is switched from the open state to the closed state due to the contact between the tip end *P* of the wire W and the third inclined surface 52c of the conduction block 5.

At eleventh step ST11, the control device 7 executes a step (fourth position calculation step) of calculating the actual position *F'* of the first machining head 3 (that is, the position coordinates of the first machining head 3) at the fourth timing. The control device 7 stores the position of the first machining head 3 at the fourth timing in the storage device 73.

It is to be noted that the first machining head 3 is preferably returned to the third standby position after the execution of eleventh step ST11 or before the execution of eleventh step ST11.

At twelfth step ST12, the first position displacement amount *V1* between the actual position of the tip end *P* of the wire W and the imaginary position *P0* of the tip end of the wire W in the direction parallel to the first direction *DR1* is calculated. Twelfth step ST12 is a first position displacement amount calculation step.

At twelfth step ST12 (first position displacement amount calculation step), at least based on the actual position *F* of the first machining head 3 at the second timing and the position of the conduction block 5, the control device 7 calculates the first position displacement amount *V1* between the actual position of the tip end *P* of the wire W and the imaginary position *P0* of the tip end of the wire W in the direction parallel to the first direction *DR1.* The first position displacement amount *V1* corresponds to an amount indicating the degree to which the tip end *P* of the wire W is displaced from the imaginary center axis AX in the first direction *DR1.*

The algorithm for calculating the first position displacement amount *V1* has already been described in the "second example of the position displacement amount calculation step" or the "fourth example of the position displacement amount calculation step". Therefore, repetitive description of the algorithm for calculating the first position displacement amount *V1* will be omitted. It is to be noted that in a case where the "second example of the position displacement amount calculation step" is employed as the algorithm for calculating the first position displacement amount *V1,* ninth step ST9 to eleventh step ST11 may be omitted.

At thirteenth step ST13, the first machining head 3 is moved with respect to the conduction block 5 so that the tip end *P* of the wire W contacts the second inclined surface 52b of the conduction block 5.

At fourteenth step ST14, the third timing at which the first electric circuit C1 is switched from the open state to the closed state is identified. Fourteenth step ST14 is a third timing specifying step.

At fourteenth step ST14 (third timing specifying step), the control device 7 specifies the third timing at which the first electric circuit C1 is switched from the open state to the closed state due to the contact between the tip end *P* of the wire W and the second inclined surface 52b of the conductive block 5.

At fifteenth step ST15, the control device 7 executes a step (third position calculation step) of calculating the actual position of the first machining head 3 at the third timing (that is, the position coordinates of the first machining head 3). The control device 7 stores the position of the first machining head 3 at the third timing in the storage device 73.

At sixteenth step ST16, the first machining head 3 is moved with respect to the conductive block 5 so that the tip end *P* of the wire W contacts the fourth inclined surface 52d of the conductive block 5.

At seventeenth step ST17, the fifth timing at which the first electric circuit C1 is switched from the open state to the closed state is identified. Seventeenth step ST17 is a fifth timing specifying step.

At seventeenth step ST17 (fifth timing specifying step), the control device 7 specifies the fifth timing at which the first electric circuit C1 is switched from the open state to the closed state due to the contact between the tip end *P* of the wire W and the fourth inclined surface 52d of the conductive block 5.

At eighteenth step ST18, the control device 7 executes a step (fifth position calculation step) of calculating the actual position *F'* of the first machining head 3 (that is, the position coordinates of the first machining head 3) at the fifth timing. The control device 7 stores the position of the first machining head 3 at the fifth timing in the storage device 73.

At nineteenth step ST19, the second position displacement amount *V2* between the actual position of the tip end *P* of the wire W and the imaginary position *P0* of the tip end of the wire in the direction parallel to the second direction *DR2* is calculated. Nineteenth step ST19 is a second positional displacement amount calculation step.

At nineteenth step ST19 (second positional displacement amount calculation step), at least based on the actual position *F* of the first machining head 3 at the third timing and the position of the conductive block 5, the control device 7 calculates the second position displacement amount *V2* between the actual position of the tip end *P* of the wire W and the imaginary position *P0 o*f the tip end of the wire W in the direction parallel to the second direction *DR2.* The second position displacement amount *V2* corresponds to an amount indicating the degree to which the tip end *P* of the wire W is displaced from the imaginary center axis AX in the second direction *DR2*.

The algorithm for calculating the second position displacement amount *V2* has already been described in the "third example of the position displacement amount calculation step" or the "fifth example of the position displacement amount calculation step". Therefore, repetitive description of the algorithm for calculating the second position displacement amount *V2* will be omitted. It is to be noted that in a case where the "third example of the position displacement amount calculation step" is employed as the algorithm for calculating the second position displacement amount *V2*, sixteenth step ST16 to eighteenth step ST18 may be omitted.

At twentieth step ST20, the control device 7 corrects the estimated relative position *F0* of the first machining head 3 with respect to the tip end *P* of the wire W in the direction parallel to the first direction *DR1* based on the calculated first position displacement amount *V1.* Twentieth step ST20 is a second position correction step. By the correction, the position control of the first machining head 3 is performed in the subsequent additive machining step in consideration of the fact that the tip end *P* of the wire W is displaced from the imaginary center axis AX in the first direction *DR1* by the first position displacement amount *V1.*

At twenty-first step ST21, based on the calculated second position displacement amount *V2*, the control device 7 corrects the estimated relative position *F0* of the first machining head 3 with respect to the tip end *P* of the wire W in the direction parallel to the second direction *DR*2. Twenty-first ST21 is a third position correction step. By the correction, the position control of the first machining head 3 is performed in the subsequent additive machining step in consideration of the fact that the tip end *P* of the wire W is displaced from the imaginary center axis AX in the second direction *DR*2 by the second position displacement amount *V*2.

At twenty-second step ST22, a molten material generated from the tip end *P* of the wire W supported by the first machining head 3 is added to the workpiece D, which is supported by the table device 2. Twenty-second step ST22 is an additive machining step.

At twenty-second step ST22 (additive machining step), current is supplied from the power supply device 13 to the second electric circuit C2, which includes the wire W, the gap G between the tip end *P* of the wire W and the workpiece D, and the cable 14, causing arc discharge to be generated between the tip end *P* of the wire W and the workpiece D. The wire W is melted by the heat generated by the arc discharge, and the resulting molten material is added to the workpiece D.

Twenty-third step ST23, the workpiece D, which is supported by the table device 2, is cut. Twenty-third step ST23 is a cutting step.

Twenty-third step ST23 (cutting step), the workpiece D (for example, an added object added to the workpiece D) is cut by the tool 41, which is supported by the second machining head 4.

### (Program and Non-transitory Computer-readable Storage Medium Storing the Program)

The storage device 73 illustrated in FIG. 12 and drawings functions as a non-transitory computer-readable storage medium storing a program. The non-transitory computer-readable storage medium storing a program may be a hard disk or a portable storage medium (for example, a CD-ROM). The method of operating the machine tool 1 according to the embodiment is realized by the program being executed by a computer 71 (more specifically, a processor of the computer 71), which is included in the control device 7 of the machine tool 1.

The above-described program causes the machine tool 1, which includes the first machining head 3, the second machining head 4, and the table device 2, to execute operations including the following steps (1) to (6). Also, when the program is executed by the computer 71, which is included in the control device 7 of the machine tool 1, the machine tool 1, which includes the first machining head 3, the second machining head 4, and the table device 2, executes the following steps (1) to (6). (1) relatively moving the first machining head 3 supporting the wire W with respect to the conduction block 5, which is disposed on the table device 2, so that the tip end *P* of the wire W exposed from the first machining head 3 supporting the wire W is brought into contact with the conduction block 5, which is disposed on the table device 2;
(2) identifying the timing at which the first electric circuit C1 is switched from the open state to the closed state by the contact between the tip end *P* of the wire W and the conduction block 5;
(3) based on the actual position of the first machining head 3 at the above-described timing and the position of the conduction block 5, calculating the position displacement amount (for example, the position displacement amount in the direction parallel to the imaginary center axis AX and/or the position displacement amount in the direction perpendicular to the imaginary center axis AX) between the actual position of the tip end *P* of the wire W and the imaginary position *P0* of the tip end of the wire W;
(4) based on the calculated position displacement amount (more specifically, the position displacement amount in the direction parallel to the imaginary center axis AX), correcting the position of the tip end *P* of the wire W, or based on the calculated position displacement amount (more specifically, the position displacement amount in the direction perpendicular to the imaginary center axis AX), correcting the estimated relative position of the first machining head 3 with respect to the tip end *P* of the wire W;
(5) after the execution of the above-described step (4), adding a molten material generated from the tip end *P* of the wire W exposed from the first machining head 3 to the workpiece D, which is supported by the table device 2; and
(6) cutting the workpiece D, which is supported by the table device 2, by driving the tool 41, which is supported by the second machining head 4.

The above-described step (1) may include the following step (1A) and/or step (1B).
(1A) relatively moving the first machining head 3 of the drive device 1 with respect to the conduction block 5, which is disposed on the table device 2 of the drive device 1, so that the tip end *P* of the wire W supported by the first machining head 3 is brought into contact with the first surface 51 of the conduction block 5.
(1B) relatively moving the first machining head 3 of the drive device 1 with respect to the conduction block 5, which is disposed on the table device 2 of the drive device 1, so that the tip end *P* of the wire W supported by the first machining head 3 is brought into contact with the first inclined surface 52a of the conduction block 5.

The above-described step (2) may include the following step (2A) and/or step (2B).
(2A) identifying the first timing at which the first electric circuit C1 is switched from the open state to the closed state due to the contact between the tip end *P* of the wire W and the first surface 51 of the conductive block 5.
(2B) identifying the second timing at which the first electric circuit C1 is switched from the open state to the closed state due to the contact between the tip end *P* of the wire W and the first inclined surface 52a of the conductive block 5.

The above-described step (3) may include the following step (3A) and/or step (3B).
(3A) based on the actual position of the first machining head 3 at the first timing and the position of the first surface 51 of the conductive block 5, calculating the position displacement amount *V* between the actual position of the tip end *P* of the wire W and the imaginary position *P0* of the tip end of the wire W in the direction perpendicular to the first surface 51.
(3B) at least based on the actual position of the first machining head 3 at the second timing and the position of the conductive block 5, calculating the first position displacement amount *V1* between the actual position of the tip end *P* of the wire W and the imaginary position *P0* of the tip end of the wire W in the direction parallel to the first direction *DR1,* which is perpendicular to the imaginary center axis AX of the wire W.

The above-described step (4) may include the following step (4A) and/or step (4B).
(4A) correcting the position of the tip end *P* of the wire W based on the position displacement amount *V* calculated at the above-described step (3A).
(4B) based on the first position displacement amount *V1* calculated at the above-described step (3B), correcting the estimated relative position *F0* of the first machining head 3 with respect to the tip end *P* of the wire W in the direction parallel to the first direction *DR1.*

The above-described program may cause the machine tool 1 to execute operations including the following step (7). Also, when the program is executed by the computer 71, which is included in the control device 7 of the machine tool 1, the machine tool 1 may execute the following step (7).
(7) before the execution of the above-described step (1), tilting the table device 2 about the first axis AX1 to make the conductive block 5, which is disposed on the table device 2, closer to the first machining head 3.

Further, the above-described program may cause the machine tool 1 to execute operations including at least one of the first step ST1 to the twenty-third step ST23. Also, when the program is executed by the computer 71, which is included in the control device 7 of the machine tool 1, the machine tool 1 may execute at least one of the first step ST1 to the twenty-third step ST23.

The present invention will not be limited to the above-described embodiments, but rather more by the scope of the present invention as defined in the appended claims. Also, the various techniques used in each embodiment or each modification can be applied in other embodiment or other modification unless a technical contradiction occurs. Further, the optional or additional configuration(s) in each embodiment or each modification can be omitted as necessary.

For example, in the first embodiment, an example in which the table device 2 is tiltable about the first axis AX1 has been described. Alternatively, as illustrated in FIG. 28, the table device 2 of a machine tool 1B according to an embodiment may be non-tiltable with respect to the base 80. Also in the first embodiment, an example in which the conductive block 5 is disposed on the side surface of the table device 2 has been described. Alternatively, as illustrated in FIG. 28, the conductive block 5 may be disposed on the upper surface of the table device 2 (for example, the upper surface of the pallet 212).

### Reference Signs List

1, 1A, 1B ... Machine tool, 2 ... Table device, 2s ... Second contact surface, 2t ... Side surface, 2u ... Upper surface, 3 ... First machining head, 4 ... Second machining head, 5, 5A, 5B, 5C ... Conduction block, 5C-1 ... First block, 5C-2 ... Second block, 5b ... Depression, 6 ... Wire supply device, 7 ... Control device, 7a ... First control device, 7b ... Second control device, 9 ... Cooling device, 11 ... Drive device, 13 ... Power supply device, 14 ... Cable, 15 ... Shield gas supply device, 21 ... Movable portion, 23 ... First support portion, 24 ... Bearing, 25 ... Second support section, 26 ... Slip ring, 27 ... Fixing member, 31 ... Tip end of first machining head, 33 ... First passage, 35 ... Second passage, 41 ... Tool, 50s ... First contact surface, 51 ... First surface, 52 ... Inclined surface, 52a ... First inclined surface, 52b ... Second inclined surface, 52c ... Third inclined surface, 52d ... Fourth inclined surface, 55 ... Fixing member, 71 ... Computer, 73 ... Storage device, 76a ... Signal line, 80 ... Base, 82 ... First frame, 84 ... Second frame, 88 ... Housing, 111 ... Machining-head drive device, 113 ... Table drive device, 113a ... First drive device, 113b ... Second drive device, 115 ... Tool drive device, 151 ... Gas supply pipe, 210 ... Table member, 212 ... Pallet, 212t ... Side surface, 212u ... Main surface, B ... Workpiece support device, C1 ... First electric circuit, C2 ... Second electric circuit, D ... Workpiece, E ... Head mount, G ... Gap, K ... Molten material, OP ... Tip opening, S ... Sensor, T ... Tube, W ... Wire

## Claims

1. A machine tool (1, 1A, 1B) comprising:
a table device (2) configured to support a workpiece (D);
a first machining head (3) configured to support a wire (W) in a state in which a tip end (P) of the wire (W) is exposed, and configured to add a molten material (K) generated from the tip end (P) of the wire (W) to the workpiece (D) supported by the table device (2);
a second machining head (4) configured to support a tool for cutting the workpiece (D) supported by the table device (2);
a power supply device (13) configured to supply a current to the wire (W);
the machine tool being **characterised by** the following:
a conduction block (5, 5A, 5B, 5C) disposed on the table device (2) and configured to identify a position of the tip end (P) of the wire (W);
a drive device (11) configured to relatively move the first machining head (3) with respect to the table device (2) so that the tip end (P) of the wire (W) exposed from the first machining head (3) and the conduction block (5, 5A, 5B, 5C) disposed on the table device (2) are brought into contact with each other; and
a first electric circuit (C1) switchable from an open state to a closed state by contact between the tip end (P) of the wire (W) exposed from the first machining head (3) and the conduction block (5, 5A, 5B, 5C) disposed on the table device (2),
wherein the conduction block (5, 5A, 5B, 5C) has
a first surface (51) for identifying a protruding length (L1) by which the wire (W) protrudes from the first machining head (3), and
an inclined surface (52) that is disposed so as to be inclined with respect to the first surface (51) and that is for identifying a displacement amount of the tip end (P) of the wire (W) displaced from an imaginary center axis (AX) of the wire (W).

2. The machine tool (1, 1A, 1B) according to claim 1, wherein an angle (α) formed between the first surface (51) and the inclined surface (52) is greater than 90 degrees.

3. The machine tool (1, 1A, 1B) according to claim 1 or 2, wherein the inclined surface (52) has
a first inclined surface (52a) for identifying a first displacement amount indicating a degree to which the tip end (P) of the wire (W) is displaced from the imaginary center axis (AX) in a first direction (DR1), and
a second inclined surface (52b) for identifying a second displacement amount indicating a degree to which the tip end (P) of the wire (W) is displaced from the imaginary center axis (AX) in a second direction (DR2),
wherein the second direction (DR2) is perpendicular to the first direction (DR1).

4. The machine tool (1, 1A, 1B) according to any one of claims 1 to 3, wherein the table device (2) has
an upper surface (2u) to which the workpiece (D) is attachable, and
a side surface (2t) on which the conduction block (5, 5A, 5B, 5C) is disposed.

5. The machine tool (1, 1A, 1B) according to claim 4, wherein the table device (2) on which the conduction block (5, 5A, 5B, 5C) is disposed is tiltable about a first axis (AX1) such that the conduction block (5, 5A, 5B, 5C) is made closer to the first machining head (3).

6. The machine tool (1, 1A, 1B) according to any one of claims 1 to 5, wherein the table device (2) comprises
a movable portion (21) movable together with the workpiece (D),
a first support portion (23) configured to support the movable portion (21) rotatably about a second axis (AX2), and
a bearing (24) disposed between the movable portion (21) and the first support portion (23),
wherein when the tip end (P) of the wire (W) and the conduction block (5, 5A, 5B, 5C) contact each other, the current supplied from the power supply device (13) flows by bypassing the bearing (24).

7. The machine tool (1, 1A, 1B) according to any one of claims 1 to 6, further comprising:
a cable (14) electrically connecting the table device (2) and the power supply device (13) to each other; and
a control device (7) configured to control the drive device (11),
wherein the control device (7) is configured to selectively execute:
a first control mode in response to a first current flowing through the first electric circuit (C1), the first electric circuit (C1) comprising the wire (W), the conduction block (5, 5A, 5B, 5C), and the cable (14), the first control mode being a mode in which the contact between the tip end (P) of the wire (W) and the conduction block (5, 5A, 5B, 5C) is detected; and
a second control mode upon supply of a second current from the power supply device (13) to a second electric circuit (C2) comprising the wire (W), a gap (G) between the tip end (P) of the wire (W) and the workpiece (D), and the cable (14), the second control mode being a mode in which additive machining is performed on the workpiece (D).

8. The machine tool (1, 1A, 1B) according to any one of claims 1 to 6, further comprising a control device (7) configured to control the drive device (11), wherein the control device (7) is configured to execute:
a moving step of moving the first machining head (3) with respect to the conduction block (5, 5A, 5B, 5C) so that the tip end (P) of the wire (W) is brought into contact with the conduction block (5, 5A, 5B, 5C);
a timing identifying step of identifying a timing at which the first electric circuit (C1) is switched from the open state to the closed state; and
a position displacement amount calculation step of, based on an actual position of the first machining head (3) at the timing and a position of the conduction block (5, 5A, 5B, 5C) at the timing, calculating a position displacement amount between an actual position of the tip end (P) of the wire (W) and an imaginary position of the tip end (P) of the wire (W).

9. A workpiece support device (B) for a machine tool (1, 1A, 1B), the machine tool (1, 1A, 1B) comprising a first machining head (3) configured to support a wire (W) in a state in which a tip end (P) of the wire (W) is exposed and configured to apply a molten material (K) generated from the tip end (P) of the wire (W) to a workpiece (D), the workpiece support device (B) comprising:
a table device (2) comprising a pallet (212) being configured to support the workpiece (D); and
the workpiece support device being **characterised by** the following:
a conduction block (5, 5A, 5B, 5C) configured to identify a position of the tip end (P) of the wire (W) supported by the first machining head (3),
wherein the conduction block (5, 5A, 5B, 5C) is attached to the pallet (212), or the conduction block (5, 5A, 5B, 5C) and the pallet (212) are integrally formed, and
wherein the conduction block (5, 5A, 5B, 5C) has
a first surface (51) for identifying a protruding length (L1) of the wire (W) protruding from the first machining head (3), and
an inclined surface (52) that is disposed so as to be inclined with respect to the first surface (51) and that is for identifying a displacement amount of the tip end (P) of the wire (W) displaced from an imaginary center axis (AX) of the wire (W).

10. The workpiece support device (B) of the machine tool (1, 1A, 1B) according to claim 9,
wherein the machine tool (1, 1A, 1B) further comprises a second machining head (4) configured to support a tool for cutting the workpiece (D), and
wherein the pallet (212) is configured to consistently support the workpiece (D) during additive machining performed on the workpiece (D) using the first machining head (3) and during cutting performed on the workpiece (D) using the second machining head (4).

11. A method of operating a machine tool (1, 1A, 1B) according to claim 1, wherein the conduction block (5, 5A, 5B, 5C) has a first inclined surface (52a),
the method of operating comprising:
a moving step of relatively moving the first machining head (3) with respect to the conduction block (5, 5A, 5B, 5C) so that the tip end (P) of the wire (W) is brought into contact with the conduction block (5, 5A, 5B, 5C);
a timing identifying step of identifying a timing at which the first electric circuit (C1) is switched from the open state to the closed state; and
a position displacement amount calculation step of, based on an actual position of the first machining head (3) at the timing and a position of the conduction block (5, 5A, 5B, 5C) at the timing, calculating a position displacement amount between an actual position of the tip end (P) of the wire (W) and an imaginary position of the tip end (P) of the wire (W)
wherein the timing identifying step comprises identifying a second timing at which the tip end (P) of the wire (W) contacts the first inclined surface (52a),
wherein the position displacement amount calculation step comprises, at least based on an actual position of the first machining head (3) at the second timing and a position of the conduction block (5, 5A, 5B, 5C) at the second timing, calculating a first position displacement amount between an actual position of the tip end (P) of the wire (W) and an imaginary position of the tip end (P) of the wire (W) in a direction parallel to a first direction (DR1) perpendicular to an imaginary center axis (AX) of the wire (W), and
wherein the method of operating further comprises a step of, based on the calculated first position displacement amount, correcting an estimated relative position of the first machining head (3) with respect to the tip end (P) of the wire (W) in the direction parallel to the first direction (DR1).

12. The method of operating the machine tool (1, 1A, 1B) according to claim 11,
wherein the timing identifying step comprises identifying a first timing at which the tip end (P) of the wire (W) contacts the first surface (51),
wherein the position displacement amount calculation step comprises, based on an actual position of the first machining head (3) at the first timing and a position of the first surface (51) of the conduction block (5, 5A, 5B, 5C) at the first timing, calculating a position displacement amount between an actual position of the tip end (P) of the wire (W) and an imaginary position of the tip end (P) of the wire (W) in a direction perpendicular to the first surface (51), and
wherein the method of operating further comprises a step of correcting the position of the tip end (P) of the wire (W) based on the calculated position displacement amount.

13. A program comprising instructions to cause the machine tool (1, 1A, 1B) according to one of the claims 1 to 8 to execute the following steps:
relatively moving the first machining head (3) supporting a wire (W) with respect to a conduction block (5, 5A, 5B, 5C) disposed on the table device (2) so that a tip end (P) of the wire (W) exposed from the first machining head (3) supporting the wire (W) is brought into contact with the conduction block (5, 5A, 5B, 5C) disposed on the table device (2), wherein the conduction block (5, 5A, 5B, 5C) has a first surface (51) for identifying a protruding length (L1) by which the wire (W) protrudes from the first machining head (3), and an inclined surface (52) that is disposed so as to be inclined with respect to the first surface (51) and that is for identifying a displacement amount of the tip end (P) of the wire (W) displaced from an imaginary center axis (AX) of the wire (W);
identifying a timing at which a first electric circuit (C1) is switched from an open state to a closed state by contact between the tip end (P) of the wire (W) and the conduction block (5, 5A, 5B, 5C);
based on an actual position of the first machining head (3) at the timing and a position of the conduction block (5, 5A, 5B, 5C) at the timing, calculating a position displacement amount between an actual position of the tip end (P) of the wire (W) and an imaginary position of the tip end (P) of the wire (W);
based on the calculated position displacement amount, correcting a position of the tip end (P) of the wire (W) or correcting an estimated relative position of the first machining head (3) with respect to the tip end (P) of the wire (W);
after the position of the tip end (P) of the wire (W) has been corrected or after the estimated relative position of the first machining head (3) with respect to the tip end (P) of the wire (W) has been corrected, adding a molten material (K) generated from the tip end (P) of the wire (W) exposed from the first machining head (3) to a workpiece (D) supported by the table device (2); and
cutting the workpiece (D) supported by the table device (2) by driving a tool supported by the second machining head (4).

## Patentansprüche

1. Werkzeugmaschine (1, 1A, 1B), die Folgendes aufweist:
eine Tischvorrichtung (2), die gestaltet ist, um ein Werkstück (D) zu stützen;
einen ersten Bearbeitungskopf (3), der gestaltet ist, um einen Draht (W) in einem Zustand zu stützen, in dem ein vorderes Ende (P) des Drahtes (W) freiliegt, und der gestaltet ist, um ein geschmolzenes Material (K), das aus dem vorderen Ende (P) des Drahtes (W) erzeugt wird, an dem Werkstück (D) hinzuzufügen, das durch die Tischvorrichtung (2) gestützt ist;
einen zweiten Bearbeitungskopf (4), der gestaltet ist, um ein Werkzeug zum spanabhebenden Bearbeiten des Werkstücks (D), das durch die Tischvorrichtung (2) gestützt ist, zu stützen;
eine Energiezufuhrvorrichtung (13), die gestaltet ist, um einen Strom zu dem Draht (W) zuzuführen;
wobei die Werkzeugmaschine **dadurch gekennzeichnet ist, dass** sie Folgendes aufweist:
einen Leitungsblock (5, 5A, 5B, 5C), der an der Tischvorrichtung (2) angeordnet ist und gestaltet ist, um eine Position des vorderen Endes (P) des Drahtes (W) zu identifizieren;
eine Antriebsvorrichtung (11), die gestaltet ist, um sich relativ zu dem ersten Bearbeitungskopf (3) in Bezug auf die Tischvorrichtung (2) so zu bewegen, dass das vordere Ende (P) des Drahtes (W), das von dem ersten Bearbeitungskopf (3) freiliegt, und der Leitungsblock (5, 5A, 5B, 5C), der an der Tischvorrichtung (2) angeordnet ist, miteinander in Kontakt gebracht werden; und
eine erste elektrische Schaltung (C1), die von einem offenen Zustand zu einem geschlossenen Zustand durch einen Kontakt zwischen dem vorderen Ende (P) des Drahtes (W), das von dem ersten Bearbeitungskopf (3) freiliegt, und dem Leitungsblock (5, 5A, 5B, 5C), der an der Tischvorrichtung (2) angeordnet ist, umschaltbar ist,
wobei der Leitungsblock (5, 5A, 5B, 5C)
eine erste Fläche (51) zum Identifizieren einer Vorsprungslänge (L1), um die der Draht (W) von dem ersten Bearbeitungskopf (3) vorsteht, und
eine schräge Fläche (52) hat, die angeordnet ist, um in Bezug auf die erste Fläche (51) geneigt zu sein, und die zum Identifizieren eines Verschiebungsausmaßes des vorderen Endes (P) des Drahtes (W), das von einer imaginären Mittelachse (AX) des Drahtes (W) verschoben ist, dient.

2. Werkzeugmaschine (1, 1A, 1B) nach Anspruch 1, wobei ein Winkel (o), der zwischen der ersten Fläche (51) und der schrägen Fläche (52) ausgebildet ist, größer ist als 90 Grad.

3. Werkzeugmaschine (1, 1A, 1B) nach Anspruch 1 oder 2, wobei die schräge Fläche (52)
eine erste schräge Fläche (52a) zum Identifizieren eines ersten Verschiebungsausmaßes, das einen Grad anzeigt, mit dem das vordere Ende (P) des Drahtes (W) von der imaginären Mittelachse (AX) in einer ersten Richtung (DR1) verschoben ist, und
eine zweite schräge Fläche (52b) zum Identifizieren eines zweiten Verschiebungsausmaßes hat, das einen Grad anzeigt, mit dem das vordere Ende (P) des Drahtes (W) von der imaginären Mittelachse (AX) in einer zweiten Richtung (DR2) verschoben ist,
wobei die zweite Richtung (DR2) senkrecht zu der ersten Richtung (DR1) ist.

4. Werkzeugmaschine (1, 1A, 1B) nach einem der Ansprüche 1 bis 3, wobei die Tischvorrichtung (2)
eine obere Fläche (2u), an der das Werkstück (D) anbringbar ist, und
eine seitliche Fläche (2t) hat, an der der Leitungsblock (5, 5A, 5B, 5C) angeordnet ist.

5. Werkzeugmaschine (1, 1A, 1B) nach Anspruch 4, wobei die Tischvorrichtung (2), an der der Leitungsblock (5, 5A, 5B, 5C) angeordnet ist, um eine erste Achse (AX1) derart kippbar ist, dass der Leitungsblock (5, 5A, 5B, 5C) näher an den ersten Bearbeitungskopf (3) gebracht wird.

6. Werkzeugmaschine (1, 1A, 1B) nach einem der Ansprüche 1 bis 5, wobei die Tischvorrichtung (2) Folgendes aufweist:
einen beweglichen Abschnitt (21), der gemeinsam mit dem Werkstück (D) beweglich ist,
einen ersten Stützabschnitt (23), der gestaltet ist, um den beweglichen Abschnitt (21) drehbar um eine zweite Achse (AX2) zu stützen, und
ein Lager (24), das zwischen dem beweglichen Abschnitt (21) und dem ersten Stützabschnitt (23) angeordnet ist,
wobei, wenn das vordere Ende (P) des Drahtes (W) und der Leitungsblock (5, 5A, 5B, 5C) miteinander in Kontakt sind, der Strom, der von der Energiezufuhrvorrichtung (13) zugeführt wird, unter Umgehung des Lagers (24) fließt.

7. Werkzeugmaschine (1, 1A, 1B) nach einem der Ansprüche 1 bis 6, die des Weiteren Folgendes aufweist:
ein Kabel (14), das die Tischvorrichtung (2) und die Energiezufuhrvorrichtung (13) miteinander elektrisch verbindet;
eine Steuerungsvorrichtung (7), die gestaltet ist, um die Antriebsvorrichtung (11) zu steuern,
wobei die Steuerungsvorrichtung (7) gestaltet ist, um wahlweise auszuführen:
einen ersten Steuerungsmodus in Erwiderung auf einen ersten Strom, der durch die erste elektrische Schaltung (C1) fließt, wobei die erste elektrische Schaltung (C1) den Draht (W), den Leitungsblock (5, 5A, 5B, 5C) und das Kabel (14) aufweist, wobei der erste Steuerungsmodus ein Modus ist, in dem der Kontakt zwischen dem vorderen Ende (P) des Drahtes (W) und dem Leitungsblock (5, 5A, 5B, 5C) erfasst wird; und
einen zweiten Steuerungsmodus während einer Zufuhr eines zweiten Stroms von der Energiezufuhrvorrichtung (13) zu einer zweiten elektrischen Schaltung (C2), die den Draht (W), einen Spalt (G) zwischen dem vorderen Ende (P) des Drahtes (W) und dem Werkstück (D) und das Kabel (14) aufweist, wobei der zweite Steuerungsmodus ein Modus ist, in dem eine zusätzliche Bearbeitung an dem Werkstück (D) ausgeführt wird.

8. Werkzeugmaschine (1, 1A, 1B) nach einem der Ansprüche 1 bis 6, die des Weiteren eine Steuerungsvorrichtung (7) aufweist, die gestaltet ist, um die Antriebsvorrichtung (11) zu steuern, wobei die Steuerungsvorrichtung (7) gestaltet ist, um Folgendes auszuführen:
einen Bewegungsschritt zum Bewegen des ersten Bearbeitungskopfs (3) in Bezug auf den Leitungsblock (5, 5A, 5B, 5C), sodass das vordere Ende (P) des Drahtes (W) mit dem Leitungsblock (5, 5A, 5B, 5C) in Kontakt gebracht wird;
einen Zeitpunktidentifizierungsschritt zum Identifizieren eines Zeitpunkts, zu dem die erste elektrische Schaltung (C1) von dem offenen Zustand zu dem geschlossenen Zustand umgeschaltet wird; und
einen Positionsverschiebungsausmaßberechnungsschritt zum Berechnen eines Positionsverschiebungsausmaßes zwischen einer tatsächlichen Position des vorderen Endes (P) des Drahtes (W) und einer imaginären Position des vorderen Endes (P) des Drahtes (W) auf der Grundlage einer tatsächlichen Position des ersten Bearbeitungskopfes (3) zu dem Zeitpunkt und einer Position des Leitungsblocks (5, 5A, 5B, 5C) zu dem Zeitpunkt.

9. Werkstückstützvorrichtung (B) für eine Werkzeugmaschine (1, 1A, 1B), wobei die Werkzeugmaschine (1, 1A, 1B) einen ersten Bearbeitungskopf aufweist, der gestaltet ist, um einen Draht (W) in einem Zustand zu stützen, in dem ein vorderes Ende (P) des Drahtes (W) freiliegt, und der gestaltet ist, um ein geschmolzenes Material (K), das aus dem vorderen Ende (P) des Drahtes (W) erzeugt wird, an einem Werkstück (D) aufzubringen, wobei die Werkstückstützvorrichtung (B) Folgendes aufweist:
eine Tischvorrichtung (2), die eine Palette (212) aufweist, die gestaltet ist, um das Werkstück (D) zu stützen; und
wobei die Werkstückstützvorrichtung **dadurch gekennzeichnet ist, dass** sie Folgendes aufweist:
einen Leitungsblock (5, 5A, 5B, 5C), der gestaltet ist, um eine Position des vorderen Endes (P) des Drahtes (W), der durch den ersten Bearbeitungskopf (3) gestützt wird, zu identifizieren,
wobei der Leitungsblock (5, 5A, 5B, 5C) an der Palette (212) angebracht ist oder der Leitungsblock (5, 5A, 5B, 5C) und die Palette (212) einstückig ausgebildet sind, und
wobei der Leitungsblock (5, 5A, 5B, 5C)
eine erste Fläche (51) zum Identifizieren einer Vorsprungslänge (L1) des Drahtes (W), der von dem ersten Bearbeitungskopf (3) vorsteht, und
eine schräge Fläche (52) hat, die angeordnet ist, um in Bezug auf die erste Fläche (51) geneigt zu sein, und die zum Identifizieren eines Verschiebungsausmaßes des vorderen Endes (P) des Drahtes (W), das von einer imaginären Mittelachse (AX) des Drahtes (W) verschoben ist, dient.

10. Werkstückstützvorrichtung (B) der Werkzeugmaschine (1, 1A, 1B, 1C) nach Anspruch 9,
wobei die Werkzeugmaschine (1, 1A, 1B) des Weiteren einen zweiten Bearbeitungskopf (4) aufweist, der gestaltet ist, um ein Werkzeug zum spanabhebenden Bearbeiten des Werkstücks (D) zu stützen, und
wobei die Palette (212) gestaltet ist, um das Werkstück (D) während einer zusätzlichen Bearbeitung, die an dem Werkstück (D) mittels des ersten Bearbeitungskopfs (3) ausgeführt wird, und während einer spanabhebenden Bearbeitung, die an dem Werkstück (D) mittels des zweiten Bearbeitungskopfs (4) ausgeführt wird, konsistent zu stützen.

11. Verfahren zum Betreiben einer Werkzeugmaschine (1, 1A, 1B) nach Anspruch 1, wobei der Leitungsblock (5, 5A, 5B, 5C) eine erste schräge Fläche (52a) hat,
wobei das Verfahren zum Betreiben Folgendes aufweist:
einen Bewegungsschritt zum relativen Bewegen des ersten Bearbeitungskopfs (3) in Bezug auf den Leitungsblock (5, 5A, 5B, 5C), sodass das vordere Ende (P) des Drahtes (W) in Kontakt mit dem Leitungsblock (5, 5A, 5B, 5C) gebracht wird;
einen Zeitpunktidentifizierungsschritt zum Identifizieren eines Zeitpunkts, zu dem die erste elektrische Schaltung (C1) von dem offenen Zustand zu dem geschlossenen Zustand umgeschaltet wird; und
einen Positionsverschiebungsausmaßberechnungsschritt zum Berechnen eines Positionsverschiebungsausmaßes zwischen einer tatsächlichen Position des vorderen Endes (P) des Drahtes (W) und einer imaginären Position des vorderen Endes (P) des Drahtes (W) auf der Grundlage einer tatsächlichen Position des ersten Bearbeitungskopfs (3) zu dem Zeitpunkt und einer Position des Leitungsblocks (5, 5A, 5B, 5C) zu dem Zeitpunkt,
wobei der Zeitpunktidentifizierungsschritt ein Identifizieren eines zweiten Zeitpunkts aufweist, zu dem das vordere Ende (P) des Drahtes (W) die erste schräge Fläche (52a) berührt,
wobei der Positionsverschiebungsausmaßberechnungsschritt zumindest ein Berechnen eines ersten Positionsverschiebungsausmaßes zwischen einer tatsächlichen Position des vorderen Endes (P) des Drahtes (W) und einer imaginären Position des vorderen Endes (P) des Drahtes (W) in einer Richtung parallel zu einer ersten Richtung (DR1) senkrecht zu einer imaginären Mittelachse (AX) des Drahtes (W) zumindest auf der Grundlage einer tatsächlichen Position des ersten Bearbeitungskopfs (3) zu dem zweiten Zeitpunkt und einer Position des Leitungsblocks (5, 5A, 5B, 5C) zu dem zweiten Zeitpunkt aufweist, und
wobei das Verfahren zum Betreiben des Weiteren einen Schritt zum Korrigieren einer abgeschätzten Relativposition des ersten Bearbeitungskopfs (3) in Bezug auf das vordere Ende (P) des Drahtes (W) in der Richtung parallel zu der ersten Richtung (DR1) auf der Grundlage des berechneten ersten Positionsverschiebungsausmaßes aufweist.

12. Verfahren zum Betreiben der Werkzeugmaschine (1, 1A, 1B) nach Anspruch 11,
wobei der Zeitpunktidentifizierungsschritt ein Identifizieren eines ersten Zeitpunkts aufweist, zu dem das vordere Ende (P) des Drahtes (W) die erste Fläche (51) berührt,
wobei der Positionsverschiebungsausmaßberechnungsschritt ein Berechnen eines Positionsverschiebungsausmaßes zwischen einer tatsächlichen Position des vorderen Endes (P) des Drahtes (W) und einer imaginären Position des vorderen Endes (P) des Drahtes (W) in einer Richtung senkrecht zu der ersten Fläche (51) auf der Grundlage einer tatsächlichen Position des ersten Bearbeitungskopfs (3) zu dem ersten Zeitpunkt und einer Position der ersten Fläche (51) des Leitungsblocks (5, 5A, 5B, 5C) zu dem ersten Zeitpunkt aufweist, und
wobei das Verfahren zum Betreiben des Weiteren einen Schritt zum Korrigieren der Position des vorderen Endes (P) des Drahtes (W) auf der Grundlage des berechneten Positionsverschiebungsausmaßes aufweist.

13. Programm, das Anweisungen aufweist, um zu bewirken, dass die Werkzeugmaschine (1, 1A, 1B) nach einem der Ansprüche 1 bis 8 die folgenden Schritte ausführt:
relatives Bewegen des ersten Bearbeitungskopfs (3), der einen Draht (W) stützt, in Bezug auf einen Leitungsblock (5, 5A, 5B, 5C), der an der Tischvorrichtung (2) angeordnet ist, sodass ein vorderes Ende (P) des Drahtes (W), das von dem ersten Bearbeitungskopf (3) freiliegt, der den Draht (W) stützt, mit dem Leitungsblock (5, 5A, 5B, 5C), der an der Tischvorrichtung (2) angeordnet ist, in Kontakt gebracht wird, wobei der Leitungsblock (5, 5A, 5B, 5C) eine erste Fläche (51) zum Identifizieren der Vorsprungslänge (L1), um die der Draht (W) von dem ersten Bearbeitungskopf (3) vorsteht, und eine schräge Fläche (52) hat, die angeordnet ist, um in Bezug auf die erste Fläche (51) geneigt zu sein, und die zum Identifizieren eines Verschiebungsausmaßes des vorderen Endes (P) des Drahtes (W), das von einer imaginären Mittelachse (AX) des Drahtes (W) verschoben ist, dient;
Identifizieren eines Zeitpunkts, zu dem die erste elektrische Schaltung (C1) von einem offenen Zustand zu einem geschlossenen Zustand durch einen Kontakt zwischen dem vorderen Ende (P) des Drahtes (W) und dem Leitungsblock (5, 5A, 5B, 5C) umgeschaltet wird;
Berechnen eines Positionsverschiebungsausmaßes zwischen einer tatsächlichen Position des vorderen Endes (P) des Drahtes (W) und einer imaginären Position des vorderen Endes (P) des Drahtes (W) auf der Grundlage einer tatsächlichen Position des ersten Bearbeitungskopfs (3) zu dem Zeitpunkt und einer Position des Leitungsblocks (5, 5A, 5B, 5C) zu dem Zeitpunkt;
Korrigieren einer Position des vorderen Endes (P) des Drahtes (W) oder Korrigieren einer abgeschätzten Relativposition des ersten Bearbeitungskopfs (3) in Bezug auf das vordere Ende (P) des Drahts (W) auf der Grundlage des berechneten Positionsverschiebungsausmaßes;
nachdem die Position des vorderen Endes (P) des Drahtes (W) korrigiert wurde oder nachdem die abgeschätzte Relativposition des ersten Bearbeitungskopfs (3) in Bezug auf das vordere Ende (P) des Drahtes (W) korrigiert wurde, Hinzufügen eines geschmolzenen Materials (K), das aus dem vorderen Ende (P) des Drahtes (W), das von dem ersten Bearbeitungskopf (3) freiliegt, erzeugt wird, zu einem Werkstück (D), das durch die Tischvorrichtung (2) gestützt ist; und
spanabhebendes Bearbeiten des Werkstücks (D), das durch die Tischvorrichtung (2) gestützt wird, durch Antreiben eines Werkzeugs, das durch den zweiten Bearbeitungskopf (4) gestützt wird.

## Revendications

1. Machine-outil (1, 1A, 1B) comprenant :
un dispositif de table (2) configuré pour supporter une pièce à usiner (D) ;
une première tête d'usinage (3) configurée pour supporter un fil (W) dans un état dans lequel une extrémité de pointe (P) du fil (W) est exposée, et configurée pour ajouter un matériau fondu (K) généré à partir de l'extrémité de pointe (P) du fil (W) à la pièce à usiner (D) supportée par le dispositif de table (2) ;
une deuxième tête d'usinage (4) configurée pour supporter un outil destiné à couper la pièce à usiner (D) supportée par le dispositif de table (2) ;
un dispositif d'alimentation électrique (13) configuré pour fournir un courant au fil (W) ;
la machine-outil étant **caractérisée par** :
un bloc de conduction (5, 5A, 5B, 5C) disposé sur le dispositif de table (2) et configuré pour identifier une position de l'extrémité de pointe (P) du fil (W) ;
un dispositif d'entraînement (11) configuré pour déplacer relativement la première tête d'usinage (3) par rapport au dispositif de table (2) de manière à ce que l'extrémité de pointe (P) du fil (W) exposée par la première tête d'usinage (3) et le bloc de conduction (5, 5A, 5B, 5C) disposé sur le dispositif de table (2) soient mis en contact l'un avec l'autre ; et
un premier circuit électrique (C1) commutable d'un état ouvert à un état fermé par contact entre l'extrémité de pointe (P) du fil (W) exposé par la première tête d'usinage (3) et le bloc de conduction (5, 5A, 5B, 5C) disposé sur le dispositif de table (2),
dans laquelle le bloc de conduction (5, 5A, 5B, 5C) a
une première surface (51) pour identifier une longueur saillante (L1) par laquelle le fil (W) fait saillie de de la première tête d'usinage (3), et
une surface inclinée (52) qui est disposée de manière à être inclinée par rapport à la première surface (51) et qui est destinée à identifier une quantité de déplacement de l'extrémité de pointe (P) du fil (W) déplacée d'un axe central imaginaire (AX) du fil (W).

2. Machine-outil (1, 1A, 1B) selon la revendication 1, dans laquelle un angle (o) formé entre la première surface (51) et la surface inclinée (52) est supérieur à 90 degrés.

3. Machine-outil (1, 1A, 1B) selon la revendication 1 ou 2, dans laquelle la surface inclinée (52) a
une première surface inclinée (52a) pour identifier une première quantité de déplacement indiquant un degré auquel l'extrémité de pointe (P) du fil (W) est déplacée de l'axe central imaginaire (AX) dans une première direction (DR1), et
une deuxième surface inclinée (52b) pour identifier une deuxième quantité de déplacement indiquant un degré auquel l'extrémité de pointe (P) du fil (W) est déplacée de l'axe central imaginaire (AX) dans une deuxième direction (DR2),
dans laquelle la deuxième direction (DR2) est perpendiculaire à la première direction (DR1).

4. Machine-outil (1, 1A, 1B) selon l'une quelconque des revendications 1 à 3, dans laquelle le dispositif de table (2) a
une surface supérieure (2u) sur laquelle la pièce à usiner (D) peut être fixée, et
une surface latérale (2t) sur laquelle est disposé le bloc de conduction (5, 5A, 5B, 5C).

5. Machine-outil (1, 1A, 1B) selon la revendication 4, dans laquelle le dispositif de table (2) sur lequel est disposé le bloc de conduction (5, 5A, 5B, 5C) est inclinable autour d'un premier axe (AX1) de sorte que le bloc de conduction (5, 5A, 5B, 5C) soit rapproché de la première tête d'usinage (3).

6. Machine-outil (1, 1A, 1B) selon l'une quelconque des revendications 1 à 5, dans laquelle le dispositif de table (2) comprend
une partie mobile (21) mobile ensemble avec la pièce à usiner (D),
une première partie de support (23) configurée pour supporter la partie mobile (21) de manière rotative autour d'un deuxième axe (AX2), et
un palier (24) disposé entre la partie mobile (21) et la première partie de support (23),
dans laquelle, lorsque l'extrémité de pointe (P) du fil (W) et le bloc de conduction (5, 5A, 5B, 5C) entrent en contact, le courant fourni par le dispositif d'alimentation électrique (13) circule en contournant le palier (24).

7. Machine-outil (1, 1A, 1B) selon l'une quelconque des revendications 1 à 6, comprenant en outre :
un câble (14) reliant électriquement le dispositif de table (2) et le dispositif d'alimentation électrique (13) l'un à l'autre ; et
un dispositif de commande (7) configuré pour commander le dispositif d'entraînement (11),
dans laquelle le dispositif de commande (7) est configuré pour exécuter sélectivement :
un premier mode de commande en réponse à un premier courant circulant dans le premier circuit électrique (C1), le premier circuit électrique (C1) comprenant le fil (W), le bloc de conduction (5, 5A, 5B, 5C), et le câble (14), le premier mode de commande étant un mode dans laquelle le contact entre l'extrémité de pointe (P) du fil (W) et le bloc de conduction (5, 5A, 5B, 5C) est détecté ; et
un deuxième mode de commande lors de la fourniture d'un deuxième courant par le dispositif d'alimentation électrique (13) à un deuxième circuit électrique (C2) comprenant le fil (W), un espace (G) entre l'extrémité de pointe (P) du fil (W) et la pièce à usiner (D), et le câble (14), le deuxième mode de commande étant un mode dans lequel l'usinage additif est effectué sur la pièce à usiner (D).

8. Machine-outil (1, 1A, 1B) selon l'une quelconque des revendications 1 à 6, comprenant en outre un dispositif de commande (7) configuré pour commander le dispositif d'entraînement (11), le dispositif de commande (7) étant configuré pour exécuter :
une étape de déplacement pour déplacer la première tête d'usinage (3) par rapport au bloc de conduction (5, 5A, 5B, 5C) de sorte que l'extrémité de pointe (P) du fil (W) soit mise en contact avec le bloc de conduction (5, 5A, 5B, 5C) ;
une étape d'identification du moment où le premier circuit électrique (C1) est commuté de l'état ouvert à l'état fermé ; et
une étape de calcul du montant de déplacement de position consistant, sur la base d'une position réelle de la première tête d'usinage (3) au moment et d'une position du bloc de conduction (5, 5A, 5B, 5C) au moment, à calculer un montant de déplacement de position entre une position réelle de l'extrémité de pointe (P) du fil (W) et une position imaginaire de l'extrémité de pointe (P) du fil (W).

9. Dispositif de support de pièce à usiner (B) pour une machine-outil (1, 1A, 1B), la machine-outil (1, 1A, 1B) comprenant une première tête d'usinage (3) configurée pour supporter un fil (W) dans un état dans lequel une extrémité de pointe (P) du fil (W) est exposée et configurée pour appliquer un matériau fondu (K) généré à partir de l'extrémité de pointe (P) du fil (W) sur une pièce à usiner (D), le dispositif de support de pièce à usiner (B) comprenant :
un dispositif de table (2) comprenant une palette (212) configurée pour supporter la pièce à usiner (D) ; et
le dispositif de support de pièce à usiner étant **caractérisé par** :
un bloc de conduction (5, 5A, 5B, 5C) configuré pour identifier une position de l'extrémité de pointe (P) du fil (W) supporté par la première tête d'usinage (3),
dans lequel le bloc de conduction (5, 5A, 5B, 5C) est fixé à la palette (212), ou le bloc de conduction (5, 5A, 5B, 5C) et la palette (212) sont formés intégralement, et
dans lequel le bloc de conduction (5, 5A, 5B, 5C) a
une première surface (51) permettant d'identifier une longueur saillante (L1) du fil (W) faisant saillie de la première tête d'usinage (3), et
une surface inclinée (52) qui est disposée de manière à être inclinée par rapport à la première surface (51) et qui est destinée à identifier une quantité de déplacement de l'extrémité de pointe (P) du fil (W) déplacée d'un axe central imaginaire (AX) du fil (W).

10. Dispositif de support de pièce à usiner (B) de la machine-outil (1, 1A, 1B) selon la revendication 9,
dans lequel la machine-outil (1, 1A, 1B) comprend en outre une seconde tête d'usinage (4) configurée pour supporter un outil pour couper la pièce à usiner (D), et
dans lequel la palette (212) est configurée pour soutenir de manière constante la pièce à usiner (D) pendant l'usinage additif effectué sur la pièce à usiner (D) à l'aide de la première tête d'usinage (3) et pendant la coupe effectuée sur la pièce à usiner (D) à l'aide de la seconde tête d'usinage (4).

11. Procédé de fonctionnement d'une machine-outil (1, 1A, 1B) selon la revendication 1, dans lequel le bloc de conduction (5, 5A, 5B, 5C) a une première surface inclinée (52a),
le procédé de fonctionnement comprenant :
une étape de déplacement consistant à déplacer relativement la première tête d'usinage (3) par rapport au bloc de conduction (5, 5A, 5B, 5C) de manière à ce que l'extrémité de pointe (P) du fil (W) soit mise en contact avec le bloc de conduction (5, 5A, 5B, 5C) ;
une étape d'identification du moment où le premier circuit électrique (C1) est commuté de l'état ouvert à l'état fermé ; et
une étape de calcul du montant de déplacement de position consistant, sur la base d'une position réelle de la première tête d'usinage (3) au moment et d'une position du bloc de conduction (5, 5A, 5B, 5C) au moment, à calculer un montant de déplacement de position entre une position réelle de l'extrémité de pointe (P) du fil (W) et une position imaginaire de l'extrémité de pointe (P) du fil (W),
dans lequel l'étape d'identification du moment comprend l'identification d'un deuxième moment auquel l'extrémité de pointe (P) du fil (W) entre en contact avec la première surface inclinée (52a),
dans lequel l'étape de calcul du montant de déplacement de position comprend, au moins sur la base d'une position réelle de la première tête d'usinage (3) au deuxième moment et d'une position du bloc de conduction (5, 5A, 5B, 5C) au deuxième moment, le calcul d'un premier montant de déplacement de position entre une position réelle de l'extrémité de pointe (P) du fil (W) et une position imaginaire de l'extrémité de pointe (P) du fil (W) dans une direction parallèle à une première direction (DR1) perpendiculaire à un axe central imaginaire (AX) du fil (W), et
dans lequel le procédé de fonctionnement comprend en outre une étape consistant, sur la base de la première quantité de déplacement de position calculée, à corriger une position relative estimée de la première tête d'usinage (3) par rapport à l'extrémité de pointe (P) du fil (W) dans la direction parallèle à la première direction (DR1).

12. Procédé de fonctionnement de la machine-outil (1, 1A, 1B) selon la revendication 11,
dans lequel l'étape d'identification du moment comprend l'identification d'un premier moment auquel l'extrémité de pointe (P) du fil (W) entre en contact avec la première surface (51),
dans lequel l'étape de calcul de la quantité de déplacement de position comprend, sur la base d'une position réelle de la première tête d'usinage (3) au premier moment et d'une position de la première surface (51) du bloc de conduction (5, 5A, 5B, 5C) au premier moment, le calcul d'une quantité de déplacement de position entre une position réelle de l'extrémité de pointe (P) du fil (W) et une position imaginaire de l'extrémité de pointe (P) du fil (W) dans une direction perpendiculaire à la première surface (51), et
dans lequel le procédé de fonctionnement comprend en outre une étape de correction de la position de l'extrémité de pointe (P) du fil (W) sur la base de la quantité de déplacement de position calculée.

13. Programme comprenant des instructions pour amener la machine-outil (1, 1A, 1B) selon l'une quelconque des revendications 1 à 8 à exécuter les étapes suivantes :
le déplacement relative de la première tête d'usinage (3) supportant un fil (W) par rapport à un bloc de conduction (5, 5A, 5B, 5C) disposé sur le dispositif de table (2) de sorte qu'une extrémité de pointe (P) du fil (W) exposée à partir de la première tête d'usinage (3) supportant le fil (W) soit mise en contact avec le bloc de conduction (5, 5A, 5B, 5C) disposé sur le dispositif de table (2), dans lequel le bloc de conduction (5, 5A, 5B, 5C) a une première surface (51) pour identifier une longueur saillante (L1) par laquelle le fil (W) fait saillie de la première tête d'usinage (3), et une surface inclinée (52) qui est disposée de manière à être inclinée par rapport à la première surface (51) et qui est pour identifier une quantité de déplacement de l'extrémité de pointe (P) du fil (W) déplacée à partir d'un axe central imaginaire (AX) du fil (W) ;
l'identification d'un moment où un premier circuit électrique (C1) est commuté d'un état ouvert à un état fermé par le contact entre l'extrémité de pointe (P) du fil (W) et le bloc de conduction (5, 5A, 5B, 5C) ;
sur la base d'une position réelle de la première tête d'usinage (3) au moment et d'une position du bloc de conduction (5, 5A, 5B, 5C) au moment, le calcul d'un montant de déplacement de position entre une position réelle de l'extrémité de pointe (P) du fil (W) et une position imaginaire de l'extrémité de pointe (P) du fil (W) ;
sur la base du montant de déplacement de position calculé, la correction d'une position de l'extrémité de pointe (P) du fil (W) ou la correction d'une position relative estimée de la première tête d'usinage (3) par rapport à l'extrémité de pointe (P) du fil (W) ;
après que la position de l'extrémité de pointe (P) du fil (W) a été corrigée ou après que la position relative estimée de la première tête d'usinage (3) par rapport à l'extrémité de pointe (P) du fil (W) a été corrigée, l'ajout d'un matériau fondu (K) généré par l'extrémité de pointe (P) du fil (W) exposé par la première tête d'usinage (3) à une pièce à usiner (D) supportée par le dispositif de table (2) ; et
la coupe de la pièce à usiner (D) supportée par le dispositif de table (2) en entraînant un outil supporté par la deuxième tête d'usinage (4).
